# EUROPEAN PATENT APPLICATION

(11) **EP 4 567 638 A1**
(43) Date of publication of application: **11.06.2025**
(21) Application number: 23870635.2
(22) Date of filing: 22.09.2023
(51) Int. Cl.: G06F 18/214, G06F 9/50, G06N 20/00

(54) **MODEL TRAINING MANAGEMENT METHOD, APPARATUS AND SYSTEM**

(30) Priority: 27.09.2022 CN 202211181988
(71) Applicant: Huawei Technologies Co., Ltd., Shenzhen, Guangdong 518129 (CN)
(72) Inventor: HUANG, Xietian, Shenzhen, Guangdong 518129 (CN); CAO, Longyu, Shenzhen, Guangdong 518129 (CN)
(74) Representative: Gill Jennings & Every LLP
(86) International application number: PCT/CN2023/120765
(87) International publication number: WO 2024/067404

(57) **Abstract**

This application provides a model training management method, an apparatus, and a system. The method includes: A model training management entity receives training status information from a first model training entity, where the training status information indicates at least one model training task of the first model training entity. The model training management entity obtains a plurality of pieces of computing power resource information, where the plurality of pieces of computing power resource information respectively indicate idle computing power resources that are of a plurality of model training entities and that are used for model training. The model training management entity determines a first target model training entity from the plurality of model training entities based on the plurality of pieces of computing power resource information. The model training management entity sends first training task configuration information to the first target model training entity, where the first training task configuration information indicates to assist the first model training entity in executing a target model training task in the at least one model training task. **In** this way, model training efficiency can be improved.

## Description

This application claims priority to Chinese Patent Application No. 202211181988.7, filed with the China National Intellectual Property Administration on September 27, 2022 and entitled "MODEL TRAINING MANAGEMENT METHOD, APPARATUS, AND SYSTEM", which is incorporated herein by reference in its entirety.

### TECHNICAL FIELD

This application relates to the field of communication technologies, and more specifically, to a model training management method, an apparatus, and a system.

### BACKGROUND

To improve intelligence and automation levels of networks, inference models, such as artificial intelligence (artificial intelligence, AI) models and machine learning (machine learning, ML) models, are applied to more technical fields. A model is usually obtained through training. For example, a model training task may be configured for a model training entity, and the model training task is executed by using training data, to obtain the model that can be used. A plurality of model training entities are usually configured in a communication system. For example, the plurality of model training entities may be respectively deployed in a plurality of base stations. A training task on the model training entity in each base station may be set based on a requirement of the base station.

However, because network environments and network requirements of different model training entities may be different and dynamically change, the different model training entities have different model training tasks accordingly. Therefore, in the communication system, model training tasks of some model training entities are overloaded, and some model training entities are excessively idle. Consequently, overall efficiency of model training in the communication system is low.

### SUMMARY

This application provides a model training management method, an apparatus, and a system, to improve model training efficiency.

According to a first aspect, a model training management method is provided. The method may be implemented by a model training management entity or a chip in the model training management entity, and the method includes: The model training management entity receives training status information from a first model training entity, where the training status information indicates at least one model training task of the first model training entity. The model training management entity obtains a plurality of pieces of computing power resource information, where the plurality of pieces of computing power resource information respectively indicate idle computing power resources that are of a plurality of model training entities and that are used for model training. The model training management entity determines a first target model training entity from the plurality of model training entities based on the plurality of pieces of computing power resource information. The model training management entity sends first training task configuration information to the first target model training entity, where the first training task configuration information indicates to assist the first model training entity in executing a target model training task in the at least one model training task.

There may be one or more target model training tasks. There may be one or more first target model training entities.

Based on this technical solution, the model training management entity may manage and orchestrate the computing power resources of the plurality of model training entities, and allocate the training task of the first model training entity to another model training entity with sufficient computing power resources to assist in completing the training, thereby shortening training waiting time of the training task of the first model training entity, and improving model training efficiency.

With reference to the first aspect, in some implementations of the first aspect, that the model training management entity obtains a plurality of pieces of computing power resource information includes: The model training management entity periodically receives the plurality of pieces of computing power resource information from the plurality of model training entities respectively.

Periodicities in which the plurality of model training entities send the computing power resource information may be the same or different.

Based on this technical solution, in a communication system in which a network status frequently changes, each model training entity may report computing power resource information of the model training entity in time, so that the model training management entity can perform orchestration and management in time, thereby improving model training efficiency. With reference to the first aspect, in some implementations of the first aspect, that the model training management entity obtains a plurality of pieces of computing power resource information includes: The model training management entity sends a plurality of pieces of computing power resource query information to the plurality of model training entities respectively. The model training management entity receives the plurality of pieces of computing power resource information from the plurality of model training entities respectively.

Optionally, when determining, based on the training status information, that the first model training entity cannot independently execute all of the at least one model training task, the model training management entity sends the plurality of pieces of computing power resource query information to the plurality of model training entities respectively.

Based on this technical solution, the model training entity may return the computing power resource information based on the query information from the model training management entity. That is, the model training management entity may send the query information to the model training entity when there is a requirement, for example, when it is determined that assistance training needs to be allocated, so that transmission resources can be saved, and real-time computing power resource information is obtained.

With reference to the first aspect, in some implementations of the first aspect, that the model training management entity receives training status information from a first model training entity includes: The model training management entity periodically receives the training status information from the first model training entity.

Periodicities in which the plurality of model training entities send the training status information may be the same or different.

Based on this technical solution, in a communication system in which a network status frequently changes, each model training entity may report training status information from the model training entity in time, so that the model training management entity can perform orchestration and management in time, thereby improving model training efficiency.

With reference to the first aspect, in some implementations of the first aspect, the method further includes: The model training management entity sends training task configuration notification information to the first model training entity, where the training task configuration notification information indicates that the first target model training entity assists in executing the target model training task. With reference to the first aspect, in some implementations of the first aspect, the method further includes: The model training management entity determines a target length of training data used by the first target model training entity to assist in executing the target model training task. The model training management entity sends second training task configuration information to the first model training entity, where the second training task configuration information indicates the first target model training entity to assist, by using the training data of the target length, in executing the target model training task.

With reference to the first aspect, in some implementations of the first aspect, the training status information further indicates a total length of training data used to complete the target model training task, and that the model training management entity determines a target length includes: The model training management entity determines the target length based on the total length and computing power resource information of the first target model training entity.

Based on this technical solution, the model training management entity may decompose the target model training task, and use the plurality of model training entities to collaboratively complete the training task, so that a training task burden of an original training body, namely, the first model training entity, of the target model training task can be reduced, resources of the plurality of model training entities are fully utilized, and training waiting time of the training task is shortened.

With reference to the first aspect, in some implementations of the first aspect, the method further includes: The model training management entity receives assistance training feedback information from the first target model training entity, where the assistance training feedback information indicates at least one of the following: precision achieved by the first target model training entity executing the target model training task, duration consumed by the first target model training entity to execute the target model training task, an execution progress of executing the target model training task by the first target model training entity, and a quantity of resources occupied by the first target model training entity to execute the target model training task.

With reference to the first aspect, in some implementations of the first aspect, the method further includes: The model training management entity receives network status change information from the first target model training entity. The model training management entity determines, based on the network status change information and the plurality of pieces of computing power resource information, to replace the first target model training entity with a second target model training entity in the plurality of model training entities. The model training management entity sends third training task configuration information to the second target model training entity, where the third training task configuration information indicates to assist the first model training entity in executing the target model training task.

Based on this technical solution, in a process of assisting in executing the model training task, the model training entity may feed back an execution status to the model training management entity, so that the model training management entity can learn of the execution status of the target model training task, and can perform adjustment in time, thereby improving model training reliability.

With reference to the first aspect, in some implementations of the first aspect, the method further includes: The model training management entity obtains policy information, where the policy information indicates a manner of determining the first target model training entity in the plurality of model training entities based on the plurality of pieces of computing power resource information, and/or indicates a manner of determining, based on the total length of the training data used to complete the target model training task, the target length of the training data used by the first target model training entity to assist in executing the target model training task.

According to a second aspect, a model training management method is provided. The method may be implemented by a model training entity or a chip in the model training entity, and the method includes: The model training entity sends training status information to a model training management entity, where the training status information indicates at least one model training task of the model training entity. The model training entity sends computing power resource information to the model training management entity, where the computing power resource information indicates an idle computing power resource that is of the model training entity and that is used for model training. The model training entity receives training task information from the model training management entity, where the training task information indicates a first target model training entity that assists in executing a target model training task in the at least one model training task.

Based on this technical solution, the model training entity may report the computing power resource information and the training status information to the model training management entity, so that the model training management entity may manage and orchestrate computing power resources of a plurality of model training entities, and allocate the training task of the model training entity to another model training entity with sufficient computing power resources to assist in completing the training, thereby shortening training waiting time of the training task of the model training entity, and improving model training efficiency.

With reference to the second aspect, in some implementations of the second aspect, that the model training entity sends computing power resource information to the model training management entity includes: The model training entity periodically sends the computing power resource information to the model training management entity. Alternatively, the model training entity receives computing power resource query information from the model training management entity. The model training entity sends the computing power resource information to the model training management entity.

With reference to the second aspect, in some implementations of the second aspect, that the model training entity sends training status information to a model training management entity includes: The model training entity periodically sends the training status information to the model training management entity. Alternatively, the model training entity sends the training status information to the model training management entity based on a trigger event.

With reference to the second aspect, in some implementations of the second aspect, the training task information further indicates the first target model training entity to assist, by using training data of a target length, in executing the target model training task.

With reference to the second aspect, in some implementations of the second aspect, the method further includes: The model training entity receives model training report information from the first target model training entity, where the model training report information indicates a submodel obtained by completing the target model training task. The model training entity performs model aggregation based on the submodel.

The implementations of the second aspect are the method for the model training entity corresponding to the implementations of the first aspect. For beneficial technical effects of the implementations of the second aspect, refer to descriptions of related implementations of the first aspect. Details are not described herein again.

According to a third aspect, a model training management method is provided. The method may be implemented by a model training entity or a chip in the model training entity, and the method includes: The model training entity sends computing power resource information to a model training management entity, where the computing power resource information indicates an idle computing power resource that is of the model training entity and that is used for model training. The model training entity receives first training task configuration information from the model training management entity, where the first training task configuration information indicates to assist a first model training entity in executing a target model training task. The model training entity assists the first model training entity in executing the target model training task.

Based on this technical solution, the model training entity may report the computing power resource information and training status information to the model training management entity, so that the model training management entity may manage and orchestrate computing power resources of a plurality of model training entities, and allocate a training task of the model training entity to another model training entity with sufficient computing power resources to assist in completing training, thereby shortening training waiting time of the training task of the model training entity, and improving model training efficiency.

With reference to the third aspect, in some implementations of the third aspect, that the model training entity sends computing power resource information to a model training management entity includes: The model training entity periodically sends the computing power resource information to the model training management entity. Alternatively, the model training entity receives computing power resource query information from the model training management entity. The model training entity sends the computing power resource information to the model training management entity.

With reference to the third aspect, in some implementations of the third aspect, that the model training entity assists the first model training entity in executing the target model training task includes: The model training entity obtains target training data. The model training entity assists, by using the target training data, the first model training entity in executing the target model training task.

With reference to the third aspect, in some implementations of the third aspect, the method further includes: The model training entity sends model training report information to the first model training entity, where the model training report information indicates a submodel obtained by completing the target model training task.

With reference to the third aspect, in some implementations of the third aspect, the method further includes: The model training entity sends assistance training feedback information to the model training management entity, where the assistance training feedback information indicates at least one of the following: precision achieved by the model training entity by executing the target model training task, duration consumed by the model training entity to execute the target model training task, an execution progress of executing the target model training task by the model training entity, and a quantity of resources occupied by the model training entity to execute the target model training task.

With reference to the third aspect, in some implementations of the third aspect, the method further includes: The model training entity sends network status change information to the model training management entity, where the network status change information indicates that the model training entity cannot complete the target model training task.

The implementations of the third aspect are the method for the first target model training entity corresponding to the implementations of the first aspect. For beneficial technical effects of the implementations of the third aspect, refer to descriptions of related implementations of the first aspect. Details are not described herein again.

According to a fourth aspect, a model training management method is provided. The method may be applied to a communication system, the communication system includes a model training management entity and a plurality of model training entities, and the method includes: A first model training entity sends training status information to the model training management entity, and the model training management entity receives the training status information from the first model training entity, where the training status information indicates at least one model training task of the first model training entity. The model training management entity obtains a plurality of pieces of computing power resource information, where the plurality of pieces of computing power resource information respectively indicate idle computing power resources that are of a plurality of model training entities and that are used for model training. The model training management entity determines a first target model training entity from the plurality of model training entities based on the plurality of pieces of computing power resource information. The model training management entity sends first training task configuration information to the first target model training entity, and the first target model training entity receives the first training task configuration information from the model training management entity, where the first training task configuration information indicates to assist the first model training entity in executing a target model training task. The first target model training entity assists the first model training entity in executing the target model training task.

Based on this technical solution, the model training entity may report the computing power resource information and the training status information to the model training management entity, so that the model training management entity may manage and orchestrate the computing power resources of the plurality of model training entities, and allocate the training task of the model training entity to another model training entity with sufficient computing power resources to assist in completing the training, thereby shortening training waiting time of the training task of the model training entity, and improving model training efficiency.

The implementations of the fourth aspect are the method for the system corresponding to the implementations of the first aspect. For beneficial technical effects of the implementations of the fourth aspect, refer to descriptions of related implementations of the first aspect. Details are not described herein again.

According to a fifth aspect, a communication apparatus is provided. The apparatus includes a transceiver module and a processing module. The transceiver module is configured to receive training status information from a first model training entity, where the training status information indicates at least one model training task of the first model training entity. The transceiver module is further configured to obtain a plurality of pieces of computing power resource information, where the plurality of pieces of computing power resource information respectively indicate idle computing power resources that are of a plurality of model training entities and that are used for model training. The processing module is configured to determine a first target model training entity from the plurality of model training entities based on the plurality of pieces of computing power resource information. The transceiver module is further configured to send first training task configuration information to the first target model training entity, where the first training task configuration information indicates to assist the first model training entity in executing a target model training task in the at least one model training task.

The communication apparatus according to the fifth aspect has a function of implementing the method in any one of the first aspect or the possible implementations of the first aspect. The function may be implemented by hardware, or may be implemented by hardware executing corresponding software. The hardware or the software includes one or more units corresponding to the foregoing function.

The implementations of the fifth aspect are the apparatus for the model training management entity corresponding to the implementations of the first aspect. For beneficial technical effects of the implementations of the fifth aspect, refer to descriptions of related implementations of the first aspect. Details are not described herein again.

According to a sixth aspect, a communication apparatus is provided. The apparatus includes a transceiver module and a processing module. The processing module is configured to generate training status information. The transceiver module is configured to send the training status information to a model training management entity, where the training status information indicates at least one model training task of a model training entity. The transceiver module is further configured to send computing power resource information to the model training management entity, where the computing power resource information indicates an idle computing power resource that is of the model training entity and that is used for model training. The transceiver module is further configured to receive training task information from the model training management entity, where the training task information indicates a first target model training entity that assists in executing a target model training task in the at least one model training task.

The communication apparatus according to the sixth aspect has a function of implementing the method in any one of the second aspect or the possible implementations of the second aspect. The function may be implemented by hardware, or may be implemented by hardware executing corresponding software. The hardware or the software includes one or more units corresponding to the foregoing function.

The implementations of the sixth aspect are the apparatus for the first model training entity corresponding to the implementations of the first aspect. For beneficial technical effects of the implementations of the sixth aspect, refer to descriptions of related implementations of the first aspect. Details are not described herein again.

According to a seventh aspect, a communication apparatus is provided. The apparatus includes a transceiver module and a processing module. The transceiver module is configured to send computing power resource information to a model training management entity, where the computing power resource information indicates an idle computing power resource that is of a model training entity and that is used for model training. The transceiver module is further configured to receive first training task configuration information from the model training management entity, where the first training task configuration information indicates to assist a first model training entity in executing a target model training task. The processing module is configured to assist the first model training entity in executing the target model training task.

The communication apparatus according to the seventh aspect has a function of implementing the method in any one of the third aspect or the possible implementations of the third aspect. The function may be implemented by hardware, or may be implemented by hardware executing corresponding software. The hardware or the software includes one or more units corresponding to the foregoing function.

The implementations of the seventh aspect are the apparatus for the first target model training entity corresponding to the implementations of the first aspect. For beneficial technical effects of the implementations of the seventh aspect, refer to descriptions of related implementations of the first aspect. Details are not described herein again.

According to an eighth aspect, a communication apparatus is provided, including a processor and a memory. Optionally, the communication apparatus may further include a transceiver. The memory is configured to store a computer program, and the processor is configured to: invoke and run the computer program stored in the memory, and control the transceiver to receive a signal and send a signal, to enable the communication apparatus to perform the method in any one of the first aspect to the fourth aspect or the possible implementations of these aspects.

For example, the communication apparatus is a model training management function.

According to a ninth aspect, a communication apparatus is provided, including a processor and a memory. Optionally, the communication apparatus may further include a transceiver. The memory is configured to store a computer program, and the processor is configured to: invoke and run the computer program stored in the memory, and control the transceiver to receive a signal and send a signal, to enable the communication apparatus to perform the method in any one of the first aspect to the fourth aspect or the possible implementations of these aspects.

For example, the communication apparatus is a model training function.

According to a tenth aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method in any one of the first aspect to the fourth aspect or the possible implementations of these aspects is performed.

The communication apparatus may be a chip used in a model training management function.

According to an eleventh aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method in any one of the first aspect to the fourth aspect or the possible implementations of these aspects is performed.

The communication apparatus may be a chip used in a model training function.

According to a twelfth aspect, a computer-readable storage medium is provided. The computer-readable storage medium stores computer instructions, and when the computer instructions are run on a computer, the method in any one of the first aspect to the fourth aspect or the possible implementations of these aspects is performed.

According to a thirteenth aspect, a computer program product is provided. The computer program product includes computer program code, and when the computer program code is run on a computer, the method in any one of the first aspect to the fourth aspect or the possible implementations of these aspects is performed.

According to a fourteenth aspect, a wireless communication system is provided, and includes the communication apparatus according to the fifth aspect, the communication apparatus according to the sixth aspect, and/or the communication apparatus according to the seventh aspect.

### BRIEF DESCRIPTION OF DRAWINGS

FIG. 1 is a diagram of a structure of a communication system to which an embodiment of this application is applicable;
FIG. 2 is a diagram of a structure of a first application scenario to which an embodiment of this application is applicable;
FIG. 3 is a diagram of a structure of a second application scenario to which an embodiment of this application is applicable;
FIG. 4 is a diagram of respectively executing model training tasks by a plurality of model training entities;
FIG. 5 is a schematic flowchart of a model training management method according to an embodiment of this application;
FIG. 6 is a schematic flowchart of a manner of obtaining training status information and computing power resource information according to an embodiment of this application;
FIG. 7 is a schematic flowchart of a method of overall training for a target model training task according to an embodiment of this application;
FIG. 8 is a schematic flowchart of a method of decomposition training for a target model training task according to an embodiment of this application;
FIG. 9 is a schematic flowchart of a method for performing feedback in a process of executing a target model training task according to an embodiment of this application;
FIG. 10 is a schematic flowchart of an implementation in which two model training management entities perform model training management according to an embodiment of this application; and
FIG. 11 to FIG. 13 are diagrams of structures of possible apparatuses according to embodiments of this application.

### DESCRIPTION OF EMBODIMENTS

The following describes technical solutions of this application with reference to the accompanying drawings.

A method in embodiments of this application may be applied to a long term evolution (long term evolution, LTE) system, a long term evolution-advanced (long term evolution-advanced, LTE-A) system, an enhanced long term evolution (enhanced long term evolution, eLTE) system, a 5^{th} generation (5^{th} Generation, 5G) mobile communication system, and a new radio (New Radio, NR) system, or may be extended to a similar wireless communication system, for example, a cellular system related to wireless fidelity (wireless fidelity, Wi-Fi), worldwide interoperability for microwave access (worldwide interoperability for microwave access, WiMAX), and the 3^{rd} generation partnership project (3rd generation partnership project, 3gpp).

For clarity, the following explains some terms in embodiments of this application.
1. An inference model (also briefly referred to as a model) is a function that is learned from data and that can implement a specific function/mapping. The model may be obtained based on an artificial intelligence (artificial intelligence, AI) or machine learning (machine learning, ML) technology. Therefore, the model may also be referred to as an artificial intelligence/AI model, a machine learning/ML model, or the like. Common algorithms for generating the AI/ML model include supervised learning, unsupervised learning, and enhanced learning. Corresponding models may be referred to as a supervised learning model, an unsupervised learning model, or an enhanced learning model. For example, the supervised learning model may be a classification model, a prediction model, a regression model, or the like, and the unsupervised learning model may be a clustering model. In addition, the model may also be obtained based on a neural network (neural network, NN) technology. This model may also be referred to as a neural network model, a deep learning model, or the like.
2. Model training entity
   A training entity of the inference model is referred to as the model training entity. For example, a capability or a function of the model training entity may be deployed on a network element, and the network element is referred to as a model training network element; or a capability or a function of the model training entity may be deployed on another device. This is not limited in embodiments of this application. For ease of description, the model training network element is used as an example for description in embodiments of this application, but may be replaced with another device that trains a capability or a function of the inference model.
3. Model training management entity
   A model training management entity is configured to: manage and orchestrate training tasks and computing power resources of a plurality of model training entities. For example, a capability or a function of the model training management entity may be deployed on a network element, and the network element is referred to as a model training management network element; or a capability or a function of the model training management entity may be deployed on another device. This is not limited in embodiments of this application. For ease of description, the model training management network element is used as an example for description in embodiments of this application, but may be replaced with another device that manages a capability or function of the model training network element.
4. Model inference entity
   An entity that performs inference or prediction based on a model is referred to as the model inference entity. For example, a capability or a function of the model inference entity may be deployed on a network element, and the network element is referred to as a model inference network element; or a capability or a function of the model inference entity may be deployed on another device. This is not limited in embodiments of this application. For ease of description, the model inference network element is used as an example for description in embodiments of this application, but may be replaced with another device with a capability or function of performing inference or prediction based on the model.
5. Model training task

The model training task is a basic working unit that can be used for division when the model training entity performs model training on the model.

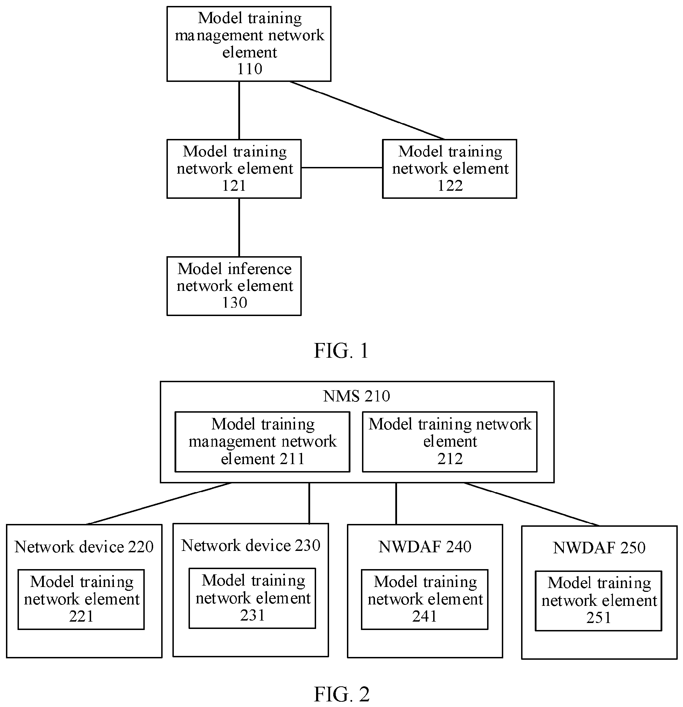

The foregoing describes related terms in embodiments of this application. The following describes, with reference to FIG. 1 to FIG. 4, application scenarios to which embodiments of this application are applicable.

FIG. 1 is a diagram of a structure of a communication system to which an embodiment of this application is applicable. First, an apparatus that may be used in the communication system 100 is described.
1. Model training management network element 110: It can be configured to: manage and orchestrate training tasks and computing power resources of a plurality of model training entities. The model management management network element 110 may be deployed in a network management system (network management system, NMS), or may be deployed in an element management system (element management system, EMS). The NMS is for network operation, management, and maintenance, and may also be referred to as a cross-domain management system. The EMS is configured to manage one or more network elements of a specific type, and may also be referred to as a domain management system or a single-domain management system. For example, the model training management network element 110 may be connected to at least one model training network element. For example, refer to FIG. 1. The model training management network element 110 is separately connected to a model training network element 121 and a model training network element 122.
2. Model training network element 121 and model training network element 122: They can be configured to train a model. The model training network element 121 may be deployed in the EMS, the NMS, a network device in a radio access network (radio access network, RAN) domain, or a core network element in a core network domain, for example, a network data analytics function (network data analytics function, NWDAF) network element. Similarly, the model training network element 122 may also be deployed in the EMS, the NMS, the network device, or the core network element. It should be noted that different model training network elements may be deployed in a same system, device, or network element. For example, the model training network element 121 and the model training network element 122 may be deployed in a same network device. Alternatively, different model training network elements may be deployed in different systems, devices, or network elements. For example, the model training network element 121 and the model training network element 122 are respectively deployed in different network devices. For another example, the model training network element 121 is deployed in the network device, and the model training network element 122 is deployed in the core network element. This is not particularly limited in this application.
3. Model inference network element 130: It can be configured to perform inference or prediction based on a model. The model inference network element 130 may be deployed in the EMS, for example, a management data analytics function (management data analytics function, MDAF) in the EMS, or the model inference network element 130 may be deployed in the network device in the RAN domain, or the core network element in the core network domain, for example, the NWDAF network element.

It should be noted that FIG. 1 is described by using an example in which the model inference network element 130 is connected to the model training network element 121. The model inference network element 130 and the model training network element 121 may be deployed in different devices. For example, the model training network element 121 may be deployed in the NMS, and the model inference network element 130 may be deployed in the network device. The model inference network element 130 and the model training network element 121 may alternatively be deployed in a same device. For example, the model inference network element 130 and the model training network element 121 may be deployed in a same network device or core network element. This is not particularly limited in this application.

It should be further noted that although not shown in the figure, the communication system 100 may include a plurality of model training management network elements. For example, the model training management network elements may be respectively deployed in the NMS and the EMS. The communication system 100 may alternatively include a plurality of model inference network elements. For example, the model training network element 122 may alternatively be connected to one model inference network element. A quantity of model training network elements, a quantity of model training management function network elements, and a quantity of model inference network elements are not limited in this application.

For better understanding of embodiments of this application, the following describes, with reference to FIG. 2 to FIG. 4, possible application scenarios to which embodiments of this application are applicable.

FIG. 2 is a diagram of a structure of a first application scenario to which an embodiment of this application is applicable.

Refer to FIG. 2. A model training management network element 211 and a model training network element 212 are deployed in an NMS 210. The NMS 210 may manage a network device 220, a network device 230, an NWDAF 240, and an NWDAF 250. A model training network element 221 is deployed on the network device 220, a model training network element 231 is deployed on the network device 230, a model training network element 241 is deployed on the NWDAF 240, and a model training network element 251 is deployed on the NWDAF 250. The model training management network element 211 and the model training network element 221 may communicate with each other through a communication interface between the NMS 210 and the network device 220. The model training management network element 211 and the model training network element 231 may communicate with each other through a communication interface between the NMS 210 and the network device 230. The model training management network element 211 and the model training network element 241 may communicate with each other through a communication interface between the NMS 210 and the NWDAF 240. The model training management network element 211 and the model training network element 251 may communicate with each other through a communication interface between the NMS 210 and the NWDAF 250. The model training management network element 211 and the model training network element 212 may communicate with each other through an internal interface in the NMS 210.

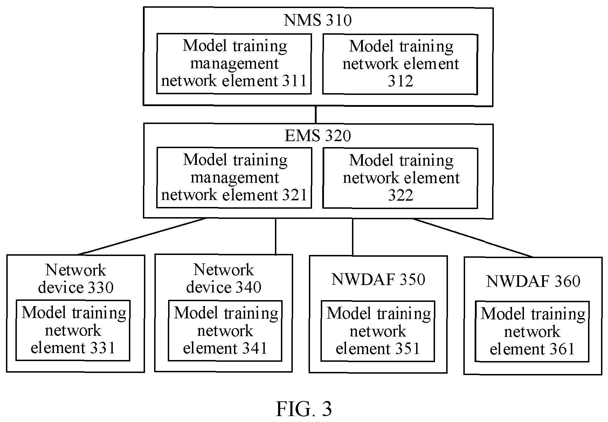

FIG. 3 is a diagram of a structure of a second application scenario to which an embodiment of this application is applicable.

Refer to FIG. 3. A model training management network element 311 and a model training network element 312 are deployed in an NMS 310, and a model training management network element 321 and a model training network element 322 are deployed in an EMS 320. The NMS 310 may manage a network device 330, a network device 340, an NWDAF 350, and an NWDAF 360 via the EMS 320. A model training network element 331 is deployed on the network device 330, a model training network element 341 is deployed on the network device 340, a model training network element 351 is deployed on the NWDAF 350, and a model training network element 361 is deployed on the NWDAF 360. The model training management network element 311 and the model training management network element 321 may jointly manage the model training network element 312, the model training network element 322, the model training network element 331, the model training network element 341, the model training network element 351, and the model training network element 361. For example, the model training management network element 321 in the EMS 320 may separately communicate with the model training network element 312, the model training network element 322, the model training network element 331, the model training network element 341, the model training network element 351, and the model training network element 361, to obtain information about each model training network element. The model training management network element 311 in the NMS 310 may provide an information analytics policy for the model training management network element 321.

The model training management network element 311 and the model training management network element 321 may communicate with each other through an interface between the NMS 310 and the EMS 320. The model training management network element 321 and the model training network element 331 may communicate with each other through a communication interface between the EMS 320 and the network device 330. The model training management network element 321 and the model training network element 341 may communicate with each other through a communication interface between the EMS 320 and the network device 340. The model training management network element 321 and the model training network element 351 may communicate with each other through a communication interface between the EMS 320 and the NWDAF 350. The model training management network element 321 and the model training network element 361 may communicate with each other through a communication interface between the EMS 320 and the NWDAF 360. The model training management network element 311 and the model training network element 312 may communicate with each other through an internal interface in the NMS 310. The model training management network element 321 and the model training network element 322 may communicate with each other through an internal interface in the EMS 320.

**In** addition, although not shown in the figure, the NMS may alternatively manage a plurality of model training network elements via a plurality of EMSs. This is not particularly limited in this application.

It should be noted that the solutions of this application may be applied to another system including a corresponding entity. This is not limited in this application. It may be understood that the foregoing entity or function may be a network element in a hardware device, may be a software function running on dedicated hardware, or may be a virtualization function instantiated on a platform (for example, a cloud platform). Optionally, the foregoing entity or function may be implemented by one device, or jointly implemented by a plurality of devices, or may be a functional module in one device. This is not specifically limited in embodiments of this application.

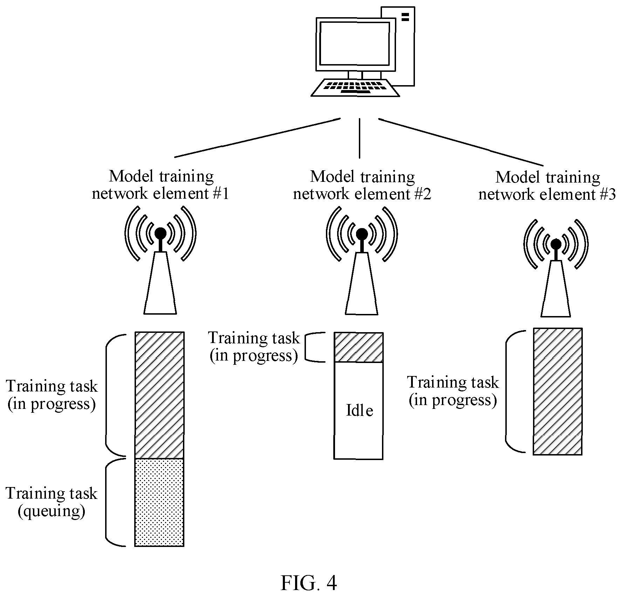

It can be learned from the foregoing descriptions that a plurality of model training network elements may be deployed in a communication system, and each model training network element may have a plurality of training tasks. However, because network environments and network requirements of different model training network elements may be different and dynamically change, the different model training network elements have different model training tasks accordingly. For ease of understanding embodiments of this application, the following provides descriptions with reference to FIG. 4.

FIG. 4 is a diagram of respectively executing model training tasks by a plurality of model training entities. FIG. 4 shows three model training network elements that respectively execute model training tasks. Because network environments and network requirements of different model training entities may be different and dynamically change, the different model training entities have different model training tasks accordingly. Refer to FIG. 4. Training tasks of the model training network element #1 are overloaded, and some training tasks are in a queue. Training tasks of the model training network element #3 are also fully loaded, and there are no idle computing power resources. The model training network element #2 still has a large quantity of idle computing power resources that are not used. It can be learned that in a specific period of time, model training tasks of a plurality of model training network elements are unevenly distributed, some model training tasks cannot be executed in time, and some computing power resources are idle and not used. Consequently, overall efficiency of model training of a communication system is low.

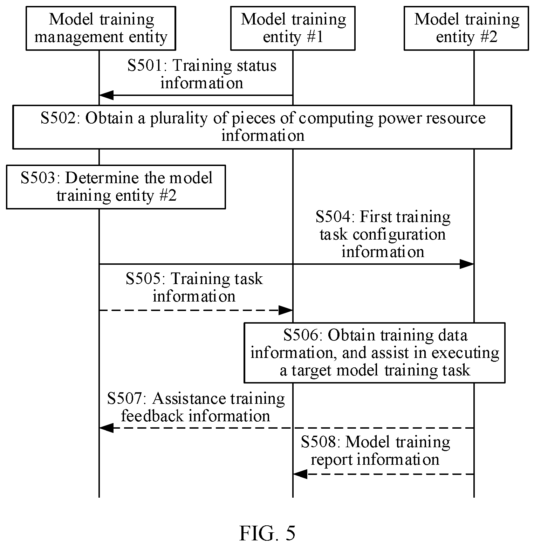

This application provides a model training management method, an apparatus, and a system, to improve model training efficiency. The following first describes a model training management method with reference to FIG. 5.

It should be first noted that, for ease of description, the embodiment shown in FIG. 5 is described by using one model training management entity and two model training entities. The two model training entities are respectively identified by a model training entity #1 and a model training entity #2. The model training entity #1 may be an example of a first model training entity that is assisted in a target model training task, and the model training entity #2 may be an example of a target model training entity that assists in executing the target model training task. A quantity of model training entities is not particularly limited in this application. For example, there may be one or more model training entities #2, that is, one or more target model training entities may assist in executing the target model training task.

The model training management entity may be any one of the model training management entities in FIG. 1 to FIG. 3, and the model training entity #1 and the model training entity #2 may be any one of the model training entities in FIG. 1 to FIG. 3. This is not particularly limited in this application.

FIG. 5 is a schematic flowchart of a model training management method according to an embodiment of this application.

S501: The model training entity #1 sends training status information to the model training management entity.

Correspondingly, the model training management entity receives the training status information from the model training entity #1.

The training status information indicates at least one model training task of the model training entity #1.

Optionally, the training status information includes at least one of the following information: identification information of the model training task, priority information of the model training task, process information of the model training task, and performance information of the model training task.

The identification information of the model training task indicates a training identifier of the at least one model training task of the model training entity #1. For example, if the model training entity #1 has three model training tasks 1 to 3, the identification information of the model training task may include identifiers of the three model training tasks.

The priority information of the model training task indicates a priority of the at least one model training task of the model training entity #1. For example, the priority information may separately indicate a priority of each of the at least one model training task of the model training entity #1. For example, the priority information indicates that a priority of the model training task 1 is high, and priorities of the model training tasks 2 and 3 are low. The priority may be represented by high, medium, or low, or may be represented by a number (1, 2, or 3). A smaller number indicates a higher priority. Alternatively, the priority information may indicate a quantity of model training tasks with the high priority that are of the model training entity #1. For example, the priority information indicates that the model training entity #1 has one model training task with the high priority. It should be noted that a setting of the priority of the model training task is not limited in this application. For example, the priority may be determined based on a time sequence of request execution, or may be determined based on an importance degree of the model training task.

The process information of the model training task indicates a process of performing model training by the model training entity #1. For example, the process information may indicate a process status of each of the at least one model training task of the model training entity #1. The process status may include waiting to run, running, and running completed. For example, the process information indicates that running of the model training task 1 is completed, the model training task 2 is running, and running of the model training task 3 is completed. Alternatively, the process information may indicate a total process of performing model training by the model training entity #1. For example, the process information indicates a quantity of model training tasks whose running is not completed (that is, the model training tasks are running or wait to run) in the model training entity #1. For example, the process information indicates that there are still two model training tasks that are not completed in the model training entity #1.

The performance information of the model training task indicates performance of the model training performed by the model training entity #1. For example, the performance information may indicate at least one of the following: time needed for performing single training on the model training task, a computing power resource needed to be occupied for performing single training on the model training task, a quantity of times needed for training the model training task, average time needed for training the model training task each time of a plurality of times, an average computing power resource needed to be occupied for training the model training task each time of the plurality of times, total time needed for training the model training task for the plurality of times, total computing power resources needed to be occupied for training the model training task for the plurality of times, average training time for executing a plurality of model training tasks, and an average computing power resource needed to be occupied for executing the plurality of model training tasks.

Optionally, the training status information further indicates that the model training entity #1 requests collaborative training. That is, the model training entity #1 may determine whether to request the collaborative training.

The collaborative training may mean that the model training entity #1 does not independently execute a specific model training task. For example, the model training task may be collaboratively executed by a plurality of model training entities. For another example, the training task may be collaboratively executed by another model training entity (for example, a model training entity #2).

In a first possible implementation, the model training entity #1 determines, based on whether idle computing power resources can meet a requirement of the training task, whether to request the collaborative training. If the requirement of the training task can be met, the model training entity #1 determines not to request the collaborative training. If the requirement of the training task cannot be met, the model training entity #1 requests the collaborative training.

For example, if the model training entity #1 needs to meet the requirement of the training task, it is estimated that 50% of the computing power resources are needed. However, the model training entity #1 currently has only 30% of the idle computing power resources. In this case, the model training entity #1 determines to request the collaborative training.

In a second possible implementation, the model training entity #1 determines, based on the priority of the model training task, whether the collaborative training needs to be performed.

For example, the model training entity #1 may have a plurality of training tasks waiting to run, and a training task with a higher priority in the plurality of training tasks runs before a training task with a lower priority. If the model training entity #1 has a training task whose priority is higher than that of a newly added training task, and the idle computing power resources are insufficient to complete all training tasks waiting to run, that is, after a resource needed for the training task with the higher priority is deducted from the idle computing power resources, a remaining computing power resource cannot meet a requirement of the training task with the higher priority, the model training entity #1 may determine to request the collaborative training.

Optionally, the training status information further indicates a target model training task for which the collaborative training is requested. That is, the model training entity #1 may determine the target model training task for which the collaborative training is requested.

It should be noted that the target model training task for which the collaborative training is requested may be any one or more of the at least one model training task on the model training entity #1, that is, the target model training task may be a newly added model training task, or may be another model training task. This is not particularly limited in this application.

In a first possible implementation, the model training entity #1 determines the target model training task based on a training process of the at least one training task. For example, the model training entity #1 determines, as the target model training task, a model training task waiting to run.

In a second possible implementation, the model training entity #1 determines the target model training task based on the priority of the at least one model training task. For example, the model training entity #1 determines a model training task with a low priority as the target model training task. For example, the model training entity #1 may set a priority value of each model training task. For example, values 1 to 10 represent different priorities in descending order of priorities. If a priority value of a model training task is greater than or equal to a specific threshold (for example, 5), the model training task is determined as the target model training task. The specific threshold may be preconfigured or dynamically determined (for example, determined based on computing power or a current network status). This is not particularly limited in this application.

For example, the model training entity #1 may directly indicate the target model training task for which the collaborative training is requested. For example, the model training entity #1 may include, in the training status information, an identifier of the model training task for which the collaborative training is requested, for example, may include an identifier of the model training task 2, indicating that the collaborative training is proposed for the model training task 2.

For another example, the model training entity #1 may alternatively indirectly indicate the target model training task on which the collaborative training is proposed to be performed. For example, the training status information may indicate to perform collaborative training on a training task whose training process is in a waiting-to-run state, or may indicate to perform collaborative training on a training task whose training process is in the waiting-to-run state and whose priority is low.

It should be noted that the model training entity #1 and the model training management entity may alternatively preconfigure or negotiate in advance how to select the training task on which the collaborative training is performed. This is not particularly limited in this application.

It may be understood that if the training status information includes identification information of the target model training task, the identification information of the target model training task may be implicitly for requesting the collaborative training.

It may be further understood that the target model training task is a model training task on which the model training entity #1 proposes to perform collaborative training. The model training management entity may change, based on an actual network status and a computing power resource of another model training entity, the target model training task on which the collaborative training is performed. This is not particularly limited in this application.

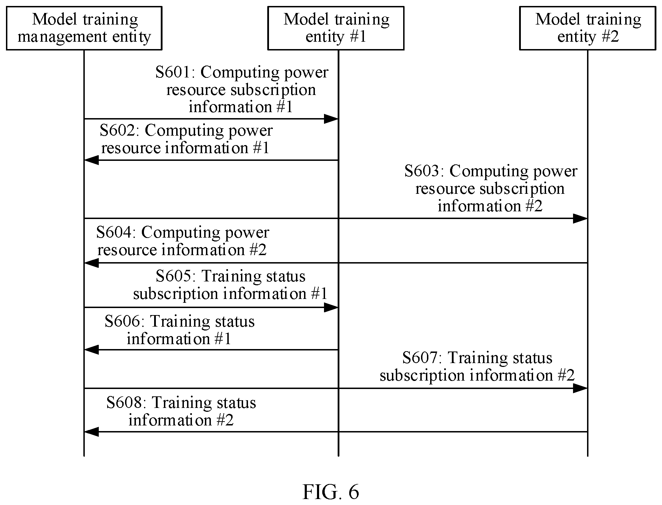

Optionally, the model training entity #1 may periodically send the training status information to the model training management entity. For example, the plurality of model training entities may be configured to periodically report the training status information. A reporting periodicity may be configured by the model training management entity or preset. This is not particularly limited in this application. Alternatively, the model training entity #1 may send the training status information to the model training management entity based on a trigger. For example, the model training entity may send training status information to the model training management entity when there is a newly added model training task. In this case, the training status information may include only information such as identification information and priority information of the newly added model training task. For ease of understanding of this embodiment of this application, for more detailed descriptions of sending, by the model training entity, the training status information to the model training management entity, refer to the following descriptions in FIG. 6. Details are not described herein again.

S502: The model training management entity obtains a plurality of pieces of computing power resource information.

The plurality of pieces of computing power resource information respectively indicate idle computing power resources that are of the plurality of model training entities and that are used for model training.

For example, the model training management entity receives computing power resource information #1 from the model training entity #1, where the computing power resource information #1 indicates an idle computing power resource that is of the model training entity #1 and that is used for model training. The model training management entity receives computing power resource information #2 from the model training entity #2, where the computing power resource information #2 indicates an idle computing power resource that is of the model training entity #2 and that is used for model training.

The computing power resource information may include at least one of the following: hardware resource information and resource usage information. The hardware resource information may indicate performance of a hardware resource. For example, the hardware resource information may indicate at least one of the following: a type of the hardware resource, a quantity of cores of the hardware resource, and a processing frequency of the hardware resource. Alternatively, the hardware resource information may indicate a quantized operation capability, for example, a quantity of floating-point operations per second (floating-point operations per second, FLOPS). Then, the model training management function may determine operation performance of the hardware resource by using the foregoing information. In addition, the resource usage information may indicate utilization of the hardware resource. For example, the resource usage information indicates idle computing power of the hardware resource, used computing power, or computing power that can be further supported for the model training. Then, a model training management function may learn of the computing capability that can be used by the model training entity for the model training.

For example, the hardware resource may include a processor, a memory, and the like. The processor may be any one or more of a central processing unit (central processing unit, CPU), a graphics processing unit (graphics processing unit, GPU), or a neural network processing unit (neural network processing unit, NPU). The memory may be any medium that can store program code, such as a USB flash drive, a removable hard disk, a read-only memory (read-only memory, ROM), a random access memory (random access memory, RAM), a magnetic disk, or an optical disc. This is not particularly limited in this application.

Optionally, the plurality of model training entities may periodically send the computing power resource information to the model training management entity respectively. For example, the plurality of model training entities may be configured to periodically report the computing power resource information. A reporting periodicity may be configured by the model training management entity or preset. This is not particularly limited in this application. Alternatively, the model training entity sends the computing power resource information to the model training management entity based on a request. For example, the model training management entity sends computing power resource query information to the model training entity, so that the model training entity sends the computing power resource information to the model training management entity. For ease of understanding this embodiment of this application, for more detailed descriptions of obtaining the computing power resource information by the model training management entity, refer to the following descriptions in FIG. 6. Details are not described herein again.

Optionally, the model training management entity sends a plurality of pieces of computing power resource query information to the plurality of model training entities respectively, and the model training management entity receives the plurality of pieces of computing power resource information from the plurality of model training entities respectively. That is, the model training entity may return the computing power resource information based on the query information from the model training management entity.

For example, when determining, based on the training status information, that the first model training entity cannot independently execute all of the at least one model training task, the model training management entity sends the plurality of pieces of computing power resource query information to the plurality of model training entities respectively. The model training entity may return the computing power resource information based on the query information from the model training management entity. That is, the model training management entity may send the query information to the model training entity when there is a requirement, for example, when it is determined that assistance training needs to be allocated, so that transmission resources can be saved.

S503: The model training management entity determines at least one model training entity #2 from the plurality of model training entities based on the plurality of pieces of computing power resource information.

The at least one model training entity #2 is configured to collaboratively execute the target model training task.

It may be understood that, if the training status information in step S501 indicates the target model training task on which the model training entity #1 requests to perform collaborative training, the model training management entity may directly determine the model training entity #2 from the plurality of model training entities based on the information about the target model training task and the plurality of pieces of computing power resource information. If the training status information in step S501 indicates that the model training entity #1 requests the collaborative training, but does not indicate the target model training task, before the model training management entity determines the model training entity #2, the model training management entity determines, based on the training status information and the plurality of pieces of computing power resource information, whether to configure the collaborative training for the model training entity #1. If the training status information in step S501 neither indicates that the model training entity #1 requests the collaborative training nor indicates the target model training task, before the model training management entity determines the model training entity #2, the model training management entity determines, based on the training status information and the plurality of pieces of computing power resource information, whether to configure the collaborative training for the model training entity #1, and determines the target model training task when the model training management entity determines to configure the collaborative training for the model training entity #1. The following separately describes how the model training management entity determines whether to configure the collaborative training for the model training entity #1 and determines the target model training task.

For how the model training management entity determines whether to configure the collaborative training for the model training entity #1, in a first possible implementation, the model training management entity determines, based on the computing power resource information and the training status information that are reported by the model training entity #1, whether to configure the collaborative training for the model training entity #1. In this implementation, a manner in which the model training management entity determines whether to configure the collaborative training for the model training entity #1 is similar to a manner in which the model training entity #1 determines whether to request the collaborative training. For example, this may be determined based on the idle computing power resources or the priority of the model training task. For detailed descriptions, refer to step S501. Details are not described herein again.

In a second possible implementation, the model training management entity determines, based on the plurality of pieces of computing power resource information and the training status information that are reported by the plurality of model training entities, whether to configure the collaborative training for the model training entity #1. For example, the model training entity determines, based on idle computing power that is of the plurality of model training entities and that is indicated by the plurality of pieces of computing power resource information, a model training task that can be processed. If the idle computing power cannot support assisting in executing the model training task indicated by the training status information, the model training management entity determines not to configure the collaborative training for the model training entity #1. If the idle computing power can support assisting in executing the model training task indicated by the training status information, the model training management entity determines to configure the collaborative training for the model training entity #1.

The model training management entity determines the target model training task when determining to configure the collaborative training for the model training entity #1. In a first possible implementation, the model training management entity determines the target model training task based on the computing power resource information and the training status information that are reported by the model training entity #1. In this implementation, a manner in which the model training management entity determines the target model training task is similar to a manner in which the model training entity #1 determines the target model training task. For example, this may be determined based on the training process or the priority. For detailed descriptions, refer to step S501. Details are not described herein again.

In a second possible implementation, the model training management entity determines the target model training task based on the plurality of pieces of computing power resource information and the training status information that are reported by the plurality of model training entities. For example, the model training management entity may determine, based on the training status information, a candidate model training task on which the collaborative training is performed. For example, all model training tasks in the waiting-to-run state are used as candidate model training tasks on which the collaborative training is performed. Then, the model training management entity determines a target model training task from selected model training tasks based on the idle computing power that is of the plurality of model training entities and that is indicated by the plurality of pieces of computing power resource information, for example, determines, as a target model training task, a model training task that can be processed by using the idle computing power of the plurality of model training entities. A specific manner of determining the model training task is not particularly limited in this application.

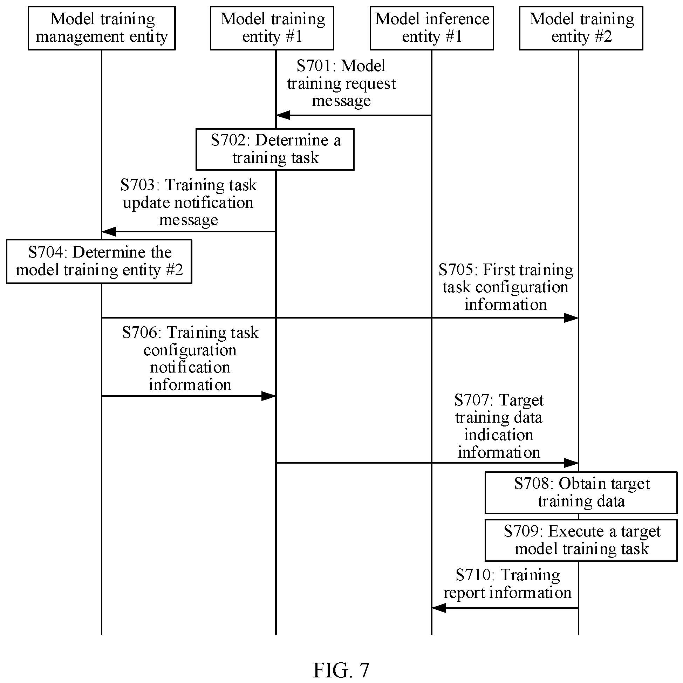

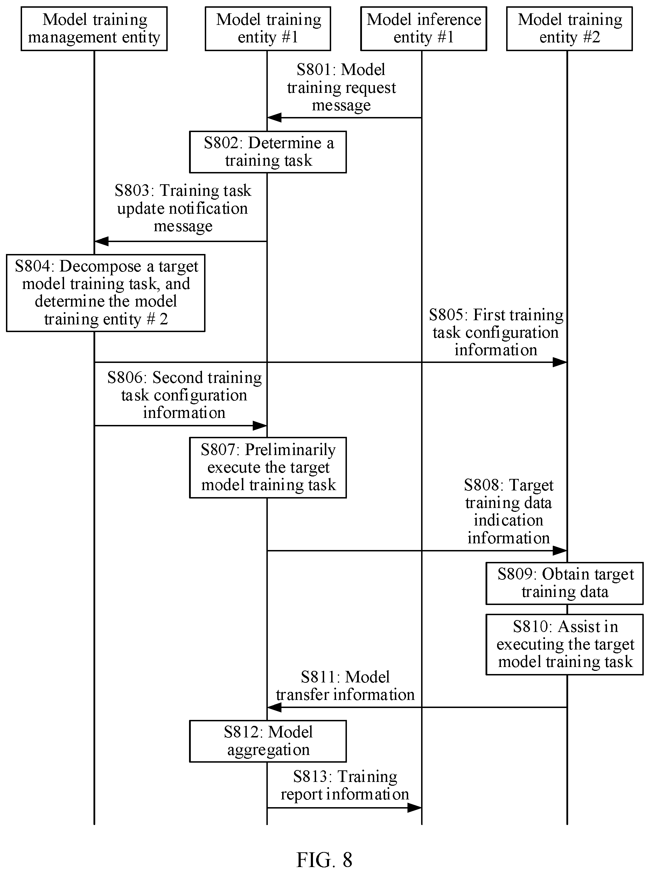

The foregoing describes whether to perform assistance training and the target model training task on which the collaborative training is performed. Optionally, the model training management entity may further implement the collaborative training of the target model training task in the following two manners. Manner 1 may be considered as overall collaborative training. To be specific, the target model training task is configured for a model training entity other than the model training entity #1 for training. Manner 2 may be considered as decomposition collaborative training. For example, the target model training task is decomposed into a plurality of target model training subtasks, each target model training subtask corresponds to training data of a target length, and the plurality of model training entities perform collaborative training by using the training data of the target length. Alternatively, for example, a target model is decomposed into a plurality of target submodels, each target submodel may be independently trained, and training of the target submodel may be understood as a target model training subtask. For ease of understanding of this embodiment of this application, for more detailed descriptions of Manner 1, refer to the following descriptions in FIG. 7. For more detailed descriptions of Manner 2, refer to the following descriptions in FIG. 8. Details are not described herein again.

It may be understood that the model training management entity may preset a specific manner to be used for processing, or the model training management entity may determine, based on the target model training task, the computing power resource information, or a capability of the model training entity, a specific manner to be used for processing. For example, if there is an idle computing power resource of a model training entity that can support execution of the target model training task, the model training management entity may perform configuration in Manner 1. To be specific, the model training entity may independently execute the target model training task. If there is no idle computing power resource of a model training entity that can support independent execution of the target model training task, the model training management entity may perform configuration in Manner 2. To be specific, the model training management entity decomposes the target model training task into a plurality of target model training subtasks, and selects a plurality of target model training entities to respectively execute the plurality of target model training subtasks.

It may be further understood that a manner in which the model training management entity determines one or more target model training entities (namely, the model training entity #2 in this embodiment of this application) is similar. For ease of description, the following uses a manner of determining one model training entity #2 for description.

Optionally, the model training management function estimates a computing power requirement of the target model training task. Then, the computing power requirement of the target model training task may be used to determine the model training entity #2.

In a possible implementation, the model training management entity determines the computing power requirement of the target model training task based on a performance requirement of the target model training task. The performance requirement may include at least one of the following: training precision of the target model training task and training duration of the target model training task. The computing power requirement may include at least one of the following: an estimated total quantity of floating-point operations (FLOPs) needed by the target model training task, an estimated quantity of floating-point operations per second (FLOPS) of the target model training task.

For example, the model training management entity may determine, based on the training precision of the target model training task, the total quantity of floating-point operations needed to achieve the training precision, and then determine the FLOPS based on the total quantity of floating-point operations and the training duration. For example, for a model training task of a model used to perform channel estimation, it is estimated that a calculation amount needed by the model training task to achieve 90% of the training precision is 0.5 TFLOPs (a quantity of operations at each layer*a quantity of layers*a quantity of iteration times). If training duration expected to complete training is 1s, the model training management entity may determine that the computing power requirement is 0.5 TFLOPS.

Optionally, the model training management function determines the model training entity #2 based on the computing power requirement of the target model training task and the plurality of pieces of computing power resource information.

In a possible implementation, the model training management entity may determine the model training entity #2 based on the computing power resource information of each of the plurality of model training entities.

For example, the model training management entity obtains hardware resource information and resource usage information of the plurality of model training entities, further determines, based on the resource usage information, at least one model training entity that further has idle computing power, and then determines, from the at least one model training entity based on the hardware resource information, the model training entity #2 that can support the computing power requirement of the target model training task.

Optionally, if there are a plurality of candidate model training entities that support the computing power requirement of the target model training task, in the plurality of candidate model training entities, the model training management entity may determine, as the model training entity #2 that performs collaborative training on the target model training task, a model training entity closest to the model training entity #1. The model training entity closest to the model training entity #1 may be a model training entity that has a shortest distance to the model training entity #1, or may be a model training entity spaced from the model training entity #1 by a smallest quantity of transmission nodes. This is not particularly limited in this application.

S504: The model training management entity sends first training task configuration information to the model training entity #2.

Correspondingly, the model training entity #2 receives the first training task configuration information from the model training management entity.

The first training task configuration information indicates the model training entity #2 to assist the model training entity #1 in executing the target model training task in the at least one model training task.

Optionally, the first training task configuration information indicates an identifier of the target model training task. Then, the model training entity #2 may obtain a to-be-trained model and training data based on the identifier of the target model training task.

Optionally, the first training task configuration information further indicates target training data of the target model training task. For example, if the model training management entity has information about the target training data used to train the target model training task, for example, the target training data, an address of the target training data, or an obtaining manner of the target training data, the model training management entity may further indicate the information about the target training data to the model training function #2.

Optionally, the first training task configuration information further indicates an identifier of the model training entity #1. Then, the model training entity #2 may assist the model training entity #1 in performing collaborative training.

Optionally, S505: The model training management entity sends training task information to the model training entity #1.

Correspondingly, the model training entity #1 receives the training task information from the model training management entity.

If the model training management entity performs configuration in the foregoing manner 1, the training task information may also be referred to as training task configuration notification information, and the training task configuration notification information indicates that the model training entity #2 assists in executing the target model training task. That is, the training task configuration notification information indicates, to the model training entity #1, the model training entity #2 assists in executing the target model training task.

For example, the training task configuration notification information may indicate an identifier of the model training entity #2. If the target model training task is determined by the model training management entity, the training task configuration notification information may further indicate an identifier of the target model training task.

If the model training management entity performs configuration in the foregoing manner 2, the training task information may also be referred to as second training task configuration information, and the second training task configuration information indicates the model training entity #2 to assist, by using training data of a target length, in executing the target model training task.

For example, the second training task configuration information may indicate an identifier of the model training entity #2 and the target length of the training data used by the model training entity #2 to perform collaborative training. If the target model training task is determined by the model training management entity, the training task configuration notification information may further indicate an identifier of the target model training task.

S506: The model training entity #2 obtains training data information, and assists in executing the target model training task.

The training data information indicates the training data that is used by the model training entity #2 to assist in executing the target model training task.

In a first possible implementation, the model training entity #2 obtains the training data information from the model training management entity. For example, the first training task configuration information further indicates target training data of the target model training task.

In a second possible implementation, the model training entity #2 may obtain the training data information from the model training entity #1. For example, the model training entity #1 may obtain the identifier of the model training entity #2 based on the received training task information, and the model training entity #1 actively sends the training data information to the model training entity #2.

Optionally, the training data information further indicates the identifier of the target model training task and the data address of the training data.

It should be noted that the data address of the training data may be an address of an apparatus that stores the training data, so that the model training entity #2 may download the training data from the apparatus based on the data address of the training data. For example, the training data may be stored in the model training entity #1 or an apparatus in which the model training entity #1 is deployed. Alternatively, the data address of the training data may be a collection address of the training data, so that the model training entity #2 may collect data based on the data address, and the collected data may be used for training the target model training task.

For example, if a model training function #1 and the model training function #2 are deployed in an NWDAF, the training data may be stored in a data collection coordination function (data collection coordination function, DCCF) entity or an analytics data repository function (analytics data repository function, ADRF) entity. For example, the training data information may indicate an identifier or an address of the DCCF or the ADRF, the model training entity #2 may send, to the DCCF or the ADRF, information (for example, Ndccf_DataManagement_Subscribe, Ndccf_DataManagement_Fetch, Nadrf_DataManagement_RetrievalRequest, or Nadrf_DataManagement_RetrievalSubscribe) for requesting the training data, and the DCCF or the ADRF sends the training data to the model training entity #2.

Optionally, the training data information further indicates the target length. Then, the model training entity #2 may obtain the training data of the target length for training.

The model training entity #2 may train the target model training task by using the training data. A manner of training the target model training task is not particularly limited in this application. For example, the model training entity #2 may use a training manner such as batch gradient descent, small-batch gradient descent, or random gradient descent.

Optionally, S507: The model training entity #2 may send assistance training feedback information to the model training management entity.

Correspondingly, the model training management entity receives the assistance training feedback information from the model training entity #2.

**In** a process in which the model training entity #2 assists the model training entity #1 in executing the target model training task, the model training entity #2 may send the assistance training feedback information to the model training management entity. The assistance training feedback information may indicate at least one of the following: precision achieved by the model training entity #2 by executing the target model training task, duration consumed by the model training entity #2 to execute the target model training task, an execution progress of executing the target model training task by the model training entity #2, and a quantity of resources occupied by the target model training entity to execute the target model training task.

For example, the model training entity #2 may periodically send the assistance training feedback information to the model training management entity. A periodicity may be configured by the model training management entity or preset. This is not particularly limited in this application.

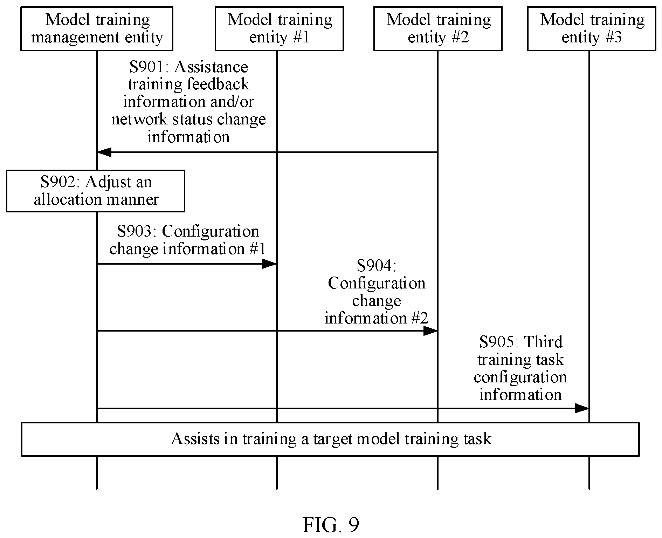

Optionally, the model training entity #2 sends network status change information to the model training management entity, where the network status change information indicates that a change occurs in a network status of the model training entity #2 and consequently the model training entity #2 cannot continue to assist in executing the target model training task. For example, the network status change information indicates that an energy saving mode of the model training function #2 changes to entering an energy saving state, that is, the model training function #2 is to be turned off to implement energy saving. For another example, the network status change information indicates that a resource used by the model training function #2 for the model training is occupied, that is, a computing power resource used by the model training function #2 to assist in executing the target model training task is insufficient. Then, the model training management entity may change, based on the network status change information, a model training entity that assists the first model training entity in executing the target model training task. For example, the model training management entity may select another model training entity to perform assistance training. For ease of understanding this embodiment of this application, this is described below in more detail with reference to FIG. 9.

It may be understood that, if the model training entity #2 periodically sends the assistance training feedback information to the model training management entity in step S507, the network status change information may be assistance training feedback information periodically sent after the network status changes.

Optionally, S508: The model training entity #2 sends model training report information.

After completing the training of the target model training task, the model training entity #2 may generate a trained model. Therefore, the model training report information may include the trained model.

Optionally, the training report information further includes performance information of the trained model, for example, training completion precision and consumed training duration.

In a first possible implementation, if the model training entity #2 independently executes the target model training task, the model training entity #2 may send the model training report information to a model inference entity #1. The model inference entity #1 may be a model inference entity that requests to execute the target model training task. For example, the model training entity #1 and the model inference entity #1 are entities deployed on a same network device, or the model training entity #1 and the model inference entity #1 are respectively deployed on different NWDAFs. For more detailed content, refer to descriptions in FIG. 7. Details are not described herein again.

In a second possible implementation, the model training entity #2 executes the target model training subtasks obtained by decomposing the target model training task. In this case, the model training entity #2 may send the model training report information to the model training entity #1, and the model training entity #1 may further perform model aggregation based on the trained model in the model training report information. For more detailed content, refer to descriptions in FIG. 8. Details are not described herein again.

It should be noted that, if the model training entity #1 and the model inference entity #1 are deployed on the different NWDAFs, the model training entity #2 may send the model training report information to the model training entity #1, or may send the model training report information to the model inference entity #1. Optionally, the model training report information may be Nnwdaf_MLModelProvision_Notify or Nnwdaf_MLModelInfo_Request response.

Based on this technical solution, the model training management entity may manage and orchestrate training tasks and the computing power resources of the plurality of model training entities, and allocate the training task of the model training entity #1 to another model training entity with sufficient resources to assist in completing the training, thereby shortening training waiting time of the training task of the model training entity #1, and improving model training efficiency.

The foregoing describes the method for managing and orchestrating the training tasks and the computing power resources of the plurality of model training entities by the model training management entity. The following describes, with reference to FIG. 6, a manner of obtaining the training status information and the computing power resource information that are mentioned in step S501 and step S502 in FIG. 5.

FIG. 6 is a schematic flowchart of a manner of obtaining training status information and computing power resource information according to an embodiment of this application.

S601: A model training management entity sends computing power resource subscription information #1 to a model training entity #1.

Correspondingly, the model training entity #1 receives the computing power resource subscription information #1 from the model training management entity.

The computing power resource subscription information is used to subscribe to computing power resource information #1 of the model training entity #1. For content of the computing power resource information, refer to descriptions of step S502 in FIG. 5. Details are not described herein again.

Optionally, the computing power resource subscription information #1 further indicates a periodicity in which the model training entity #1 reports the computing power resource information #1. For example, the model training management entity may determine the periodicity based on average time consumed by the model training entity to execute a training task.

S602: The model training entity #1 sends the computing power resource information #1 to the model training management entity.

Correspondingly, the model training management entity receives the computing power resource information #1 from the model training entity #1.

The model training entity #1 may send the computing power resource information #1 to the model training management entity in response to the computing power resource subscription information #1. The computing power resource information #1 may include computing power resource information subscribed to by the computing power resource subscription information #1.

Optionally, the model training entity #1 periodically sends the computing power resource information #1 to the model training management entity.

S603: The model training management entity sends computing power resource subscription information #2 to a model training entity #2.

Correspondingly, the model training entity #2 receives the computing power resource subscription information #2 from the model training management entity.

The computing power resource subscription information #2 is used to subscribe to computing power resource information #2 of the model training entity #2. Descriptions in this step are similar to those in step S601. Details are not described herein again.

It may be understood that the computing power resource subscription information #1 further indicates the periodicity in which the model training entity #1 reports the computing power resource information #1, the computing power resource subscription information #2 further indicates a periodicity in which the model training entity #2 reports the computing power resource information #2, where the two periodicities may be the same or different. For example, a periodicity in which each model training entity reports computing power resource information may be determined based on average time consumed by each model training entity to execute a training task. This is not particularly limited in this application.

S604: The model training entity #2 sends computing power resource information #2 to the model training management entity.

Correspondingly, the model training management entity receives the computing power resource information #2 from the model training entity #2.

The model training entity #2 may send the computing power resource information #2 to the model training management entity in response to the computing power resource subscription information #2. The computing power resource information #2 may include the computing power resource information #2 subscribed to by the computing power resource subscription information #2.

Optionally, the model training entity #2 periodically sends the computing power resource information #2 to the model training management entity.

S605: The model training management entity sends training status subscription information #1 to the model training entity #1.

Correspondingly, the model training entity #1 receives the training status subscription information #1 from the model training management entity.

The training status subscription information #1 is used to subscribe to training status information #1 of the model training entity #1. For content of the training status information, refer to descriptions of step S501 in FIG. 5. Details are not described herein again.

Optionally, the training status subscription information #1 indicates the model training entity #1 to periodically send the training status information #1.

Optionally, the training status subscription information #1 indicates the model training entity #1 to send the training status information #1 based on a trigger event. The trigger event may include at least one of the following: A training task is newly added to the model training entity #1, and the model training entity #1 completes a specific training task.

S606: The model training entity #1 sends training status information #1 to the model training management entity.

Correspondingly, the model training management entity receives the training status information #1 from the model training entity #1.

The model training entity #1 may send the training status information #1 to the model training management entity in response to the training status subscription information #1. The training status information #1 may include training status information #1 subscribed to by using the training status subscription information #1.

Optionally, the model training entity #1 periodically sends the training status information #1 to the model training management entity.

Optionally, the model training entity #1 sends the training status information #1 to the model training management entity based on the trigger event.

S607: The model training management entity #1 sends training status subscription information #2 to the model training entity #2.

Correspondingly, the model training entity #2 receives the training status subscription information #2 from the model training management entity.

The training status subscription information #2 is used to subscribe to training status information #2 of the model training entity #2. Descriptions in this step are similar to those in step S605. Details are not described herein again.

It may be understood that the training status subscription information #1 further indicates a periodicity in which the model training entity #1 reports the training status information #1, the training status subscription information #2 further indicates a periodicity in which the model training entity #2 reports the training status information #2, where the two periodicities may be the same or different. For example, a periodicity in which each model training entity reports training status information may be determined based on average time consumed by each model training entity to execute a training task. This is not particularly limited in this application.

S608: The model training entity #2 sends the training status information #2 to the model training management entity.

Correspondingly, the model training management entity receives the training status information #2 from the model training entity #2.

The model training entity #2 may send the training status information #2 to the model training management entity in response to the training status subscription information #2.

Optionally, the model training entity #2 periodically sends the training status information #2 to the model training management entity.

Optionally, the model training entity #2 sends the training status information #2 to the model training management entity based on the trigger event.

It may be understood that, for ease of understanding of this embodiment of this application, FIG. 6 is merely an example in which two model training entities are used for description. The model training management entity may further manage three or more model training entities. The model training management entity may send computing power resource subscription information and training status subscription information to each model training entity. This is not particularly limited in this application.

Based on this technical solution, in a communication system in which a network status frequently changes, each model training entity may report computing power resource information and training status information of the model training entity in time, so that the model training management entity can perform orchestration and management in time, thereby improving model training efficiency.

The foregoing describes a manner in which the model training management entity obtains the training status information and a manner in which the model training management entity obtains the computing power resource information. The following separately describes, with reference to FIG. 7 and FIG. 8, Manner 1 and Manner 2 mentioned in step S503 in FIG. 5. Manner 1, that is, an implementation of overall training of the target model training task is described FIG. 7, and Manner 2, that is, an implementation of decomposition training of the target model training task is described FIG. 8.

FIG. 7 is a schematic flowchart of a method of overall training for a target model training task according to an embodiment of this application.

It should be noted that steps shown in FIG. 7 may be performed after steps shown in FIG. 6. To be specific, a model training entity may send training status information to a model training management entity periodically or based on a trigger event, and the model training entity may also periodically send computing power resource information to the model training management entity.

S701: A model inference entity #1 sends a model training request message to a model training entity #1.

The model training request message is for requesting the model training entity #1 to train an inference model.

Optionally, the model training request message includes at least one of the following information: the inference model, identification information of the inference model, model performance requirement information, and expected training duration information.

The inference model is a to-be-trained inference model, and both the inference model and the identification information of the inference model may identify the inference model. For example, the inference model may be a model file of the inference model, and the model file may include an identifier or an inference type for identifying the inference model. The model performance requirement information may indicate a model training requirement. For example, it is expected that precision obtained through training of the inference model may be greater than or equal to a specific threshold, or accuracy obtained through training may be greater than or equal to a specific threshold. The expected training duration information may indicate expected training duration occupied by model training. For example, the expected training duration information may include first duration, indicating the model training entity to complete the model training within the first duration from a moment of receiving the model training request message.

It should be noted that the model inference entity #1 and the model training entity #1 may be two modules deployed in one device, for example, the model training network element 121 and the model inference network element 130 shown in FIG. 1. That is, the model inference entity #1 may send the model training request message to the model training entity #1 in the device by default. The model training request message in step S710 is transferred through an internal interface, thereby reducing external interface overheads. The model inference entity #1 and the model training entity #1 may alternatively be deployed in different NWDAFs. In this case, the model training request message may be exchanged through an interface between the NWDAFs. The model training request message may alternatively be a model subscription message or a model request message (for example, Nnwdaf_MLModelProvision_Subscribe or Nnwdaf_MLModelInfo_Request). The message may include an analytics identifier (Analytics ID) corresponding to a requested model, and the analytics identifier indicates a specific analytics type, for example, slice load level correlation analytics (Analytics ID=Load level information) or network function load analytics (Analytics ID=NF load information)

S702: The model training entity #1 determines a training task.

The model training entity #1 may determine the training task based on the model training request message. For example, the model training entity #1 may generate the training task of the inference model based on the inference model or locate the training task of the inference model by using an index of the inference model. For example, the model training entity #1 may generate the training task based on the information in the model training request message, or may set a parameter of the training task based on the model training request message, for example, a weight. This is not particularly limited in this application.

Optionally, the model training entity #1 may determine, based on the training task, whether to request collaborative training. For example, the model training entity #1 determines, based on whether the idle computing power resources can meet the requirement of the training task, whether to request the collaborative training. For another example, the model training entity #1 determines, based on the priority of the model training task, whether the collaborative training needs to be performed. For content of this part, refer to descriptions of step S501 in FIG. 5. Details are not described herein again.

Optionally, the model training entity #1 determines the target model training task for which the collaborative training is requested. For content of this part, refer to descriptions of step S501 in FIG. 5. Details are not described herein again.

S703: The model training entity #1 sends a training task update notification message to the model training management entity.

The training task update notification message indicates a newly added model training task on the model training entity #1.

It may be understood that, if the model training entity #1 sends the training status information based on the trigger event, the trigger event is that the model training task is newly added to the model training entity #1. For example, in step S701, the model training entity #1 receives the model training request information from the model inference entity, and the training task update notification information may notify the model training management entity of the newly added model training task on the model training entity #1. In this case, the training task update notification message may be the training status information sent based on the trigger event.

The training task update notification message may indicate information about all training tasks on the model training entity #1, or the training task update notification message may indicate information about a changed training task. The changed training task may include a training task whose task process changes, a newly added training task, and the like.

If the training task update notification message notifies the information about all the training tasks on the model training entity #1, optionally, the training task update notification message indicates at least one of the following: at least one training task on the model training entity #1, a task process of each of the at least one training task, and a priority of each of the at least one training task.

For example, the training task update notification message includes three training tasks 1 to 3, the training task 1 is running, the training task 2 and the training task 3 wait to run, and a priority of the training task 2 is higher than a priority of the training task 3. Then, the model training management entity may determine, with reference to computing power resource information #1 reported by the model training entity #1, whether the model training entity #1 can independently complete training of the three training tasks, that is, request to perform collaborative training.

If the training task update notification message notifies the information about the training task whose task process changes on the model training entity #1, information about the newly added training task, and the like, optionally, the training task update notification message includes at least one of the following: an identifier of the training task whose task process changes and a type of the task process that changes, an identifier of the newly added training task, and a priority of the newly added training task. Therefore, transmission resources can be saved.

For example, the training task update notification message notifies that training of a training task #1 on the model training entity #1 has been completed, and a training task 3 is newly added. It should be noted that the training task update notification message does not include information about a training task #2, and may indicate that a task process of the training task #2 has not changed. For example, the training task #2 may be still in training, or is still waiting to run.

S704: The model training management entity determines a model training entity #2 from a plurality of model training entities based on a plurality of pieces of computing power resource information.

At least one model training entity #2 is configured to collaboratively execute the target model training task. The model training management entity may obtain the target model training task from the training task update notification message, or the model training management entity may autonomously determine the target model training task based on the training task update notification message. For content of determining the model training entity #2 by the model training management entity, refer to descriptions of step S503 in FIG. 5. Details are not described herein again.

S705: The model training management entity sends first training task configuration information to the model training entity #2.

The first training task configuration information indicates the model training entity #2 to assist the model training entity #1 in executing the target model training task in the at least one model training task. For content of the first training task configuration information, refer to descriptions of step S504 in FIG. 5. Details are not described herein again.

S706: The model training management entity sends training task configuration notification information to the model training entity #1.

The training task configuration notification information indicates that the model training entity #2 assists in executing the target model training task. For content of the training task configuration notification information, refer to descriptions of step S505 in FIG. 5. Details are not described herein again.

S707: The model training entity #1 sends target training data indication information to the model training entity #2.

The target training data indication information indicates target training data used to train the target model training task.

It may be understood that if the model training management entity does not have information about the target training data, that is, does not include the information about the target training data in the first training task configuration information in step S705, the model training entity #1 may learn, based on the training task configuration notification information, that the model training entity #2 trains the target model training task, and send the target training data indication information to the model training entity #2.

S708: The model training entity #2 obtains the target training data.

For example, the model training entity #2 downloads the target training data based on the target training data indication information. For example, the target training data is stored in the model training entity #1, the model training entity #2 sends a download request to the model training entity #1, and the model training entity #1 sends the target training data to the model training entity #2. For content of the target training data, refer to descriptions of step S506 in FIG. 5. Details are not described herein again.

S709: The model training entity #2 assists in executing the target model training task.

The model training entity #2 may train the target model training task by using the target training data. For content of assisting in executing the target model training task, refer to descriptions of step S506 in FIG. 5. Details are not described herein again.

S710: The model training entity #2 sends training report information to the model inference entity #1.

After completing the training of the target model training task, the model training entity #2 may generate a trained model. Then, the training report information may include the trained model.

Optionally, the training report information further includes performance information of the trained model, for example, training completion precision and consumed training duration. Then, the model inference entity may directly obtain, from the model training entity #2, the trained model that can be used.

Based on this technical solution, the model training management entity may manage and orchestrate training tasks and computing power resources of the plurality of model training entities, and allocate the training task of the model training entity #1 to another model training entity with sufficient resources to assist in completing the training, thereby shortening training waiting time of the training task of the model training entity #1, improving system resource utilization, and improving model training efficiency.

FIG. 8 is a schematic flowchart of a method for decomposition training for a target model training task according to an embodiment of this application.

It should be noted that steps shown in FIG. 8 may be performed after steps shown in FIG. 6. To be specific, a model training entity may send training status information to a model training management entity periodically or based on a trigger event, and the model training entity may also periodically send computing power resource information to the model training management entity.

S801: A model inference entity sends a model training request message to a model training entity #1.

The model training request message is for requesting the model training entity #1 to train an inference model. For content of this part, refer to descriptions of step S701 in FIG. 7. Details are not described herein again.

S802: The model training entity #1 determines a training task.

The model training entity #1 may determine the training task based on the model training request message. For content of this part, refer to descriptions of step S702 in FIG. 7. Details are not described herein again.

S803: The model training entity #1 sends a training task update notification message to the model training management entity.

The training task update notification message indicates a newly added model training task on the model training entity #1. For content of the training task update notification message, refer to descriptions of step S703 in FIG. 7. Details are not described herein again.

Optionally, the model training request message may further include training data length information. The training data length information indicates a length of training data, and the training data is used to execute the training task.

For example, the training data length information may indicate a length of training data of each training task on the model training entity #1, so that the model training management entity can determine, based on the length of the training data corresponding to each training task, a target model training task on which collaborative training is performed, thereby improving reliability of determining the target model training task.

For another example, if the model training entity #1 determines a target model training task on which the collaborative training is needed, that is, the training task update notification message includes information about the target model training task, the training data length information may indicate only a length of target training data corresponding to the target model training task, so that transmission resources can be saved.

S804: The model training management entity decomposes the target model training task, and determines a model training entity #2.

The model training management entity may obtain the target model training task from the training task update notification message, or the model training management entity may autonomously determine the target model training task based on the training task update notification message. For related content, refer to descriptions of step S503 in FIG. 5. Details are not described herein again.

Optionally, the model training management entity may decompose the target model training task by splitting a target model, or the model training management entity may decompose the target model training task by splitting training data.

If the model training management entity decomposes the target model training task by splitting the target model, the model training management entity may determine, based on computing power resource information of a plurality of model training entities, M model training entities that participate in training the target model training task, and split the target model into M target submodels. Each target submodel may be separately trained by the model training entity, training of one target submodel is one model training subtask, and M is a positive integer.

For example, the target model is a four-layer neural network model. The model training management entity may decompose the neural network model into two target submodels, where first two layers of the neural network model are used as one target submodel, and last two layers of the neural network model are used as the other target submodel.

If the model training management entity decomposes the target model training task by splitting the training data, the model training management entity may decompose the target model training task into a plurality of target model training subtasks based on the computing power resource information of the plurality of model training entities, and determine a training data sub-length corresponding to each target model training subtask.

For example, the model training management entity may determine, based on the computing power resource information of the plurality of model training entities, N model training entities that participate in training the target model training task, divide the target model training task into the N target model training subtasks, and determine a training data sub-length of each of the N target model training subtasks. The N model training entities may respectively train the N target model training subtasks. N is a positive integer greater than or equal to 1.

It may be understood that the N model training entities may include the model training entity #1, or may not include the model training entity #1. For example, if the model training entity #1 still has idle computing power, the model training entity #1 may train one of the target model training subtasks. If the model training entity #1 does not have idle computing power, the model training entity #1 may not participate in training of the target model training task, and other N model training entities #2 separately perform training.

It should be noted that the model training management entity may set the model training entity #1 as a primary model training entity, and set the another model training entity as a collaborative model training entity. The primary model training entity may receive, from the collaborative model training entity, a submodel obtained by the collaborative model training entity by training the target model training subtask. The model training entity #1 is used as the primary model training entity, so that reliability of training task allocation can be improved.

For example, the model training management entity determines, based on the computing power resource information, that the model training entity #1 and the model training entity #2 perform collaborative training on the target model training task. The model training entity #1 may be used as the primary model training entity, and the model training entity #2 is used as the collaborative model training entity.

Optionally, the model training management entity determines that the model training entity #2 assists in executing the target model task, and determines that training data used to assist in executing the target model task is the target length.

It may be understood that the model training management entity may first determine the model training entity #2, and then decompose the target model training task; or the model training management entity may first decompose the target model training task, and then determine the model training entity #2; or the model training management entity may synchronously decompose the target model training task and determine the model training entity #2. This is not particularly limited in this application. For content that the model training management entity determines the model training entity #2, refer to descriptions of step S503 in FIG. 5. Details are not described herein again.

For ease of understanding this embodiment of this application, the following describes this embodiment of this application by using the foregoing examples. Another allocation manner, for example, a manner in which at least two model training entities execute a target collaborative training task, is similar to this allocation manner. Details are not described below.

S805: The model training management entity sends first training task configuration information to the model training entity #2.

The first training task configuration information indicates the model training entity #2 to assist the model training entity #1 in executing the target model training task in the at least one model training task. For content of the first training task configuration information, refer to descriptions of step S504 in FIG. 5. Details are not described herein again.

S806: The model training management entity sends second training task configuration information to the model training entity #1.

The second training task configuration information indicates that the model training entity #2 assists the model training entity #1 in executing the target model training task.

Optionally, the second training task configuration information indicates an identifier of the target model training task and an identifier of the model training entity #2. Then, the model training entity #1 may learn that the model training entity #2 executes the target model training task.

Optionally, if the model training management entity decomposes the model training task by splitting the target model, the second training task configuration information further indicates splitting manner information, for example, a splitting node identifier. The splitting node information indicates a manner of splitting the target model. Therefore, a model training function #1 may learn, based on the splitting manner information, of target submodels into which the target model is split.

Optionally, if the model training management entity decomposes the model training task by splitting the training data, the second training task configuration information further indicates the target length of training data used by the model training entity #2 to assist in executing the target model training task. Then, the model training entity #1 may indicate the training data of the target length to the model training entity #2.

S807: The model training entity #1 preliminarily executes the target model training task.

The model training entity #1 determines a model structure, a training algorithm, a training hyperparameter, and the like, and performs several rounds of initial model training by using the training data of the target length at the model training entity #1, to obtain an initial model.

S808: The model training entity #1 sends target training data indication information to the model training entity #2.

The target training data indication information indicates target training data used to train the target model training task. The target training data indication information indicates the model training entity #2 to use the training data of the target length to assist in executing the target model training task.

Optionally, if the model training management entity decomposes the model training task by splitting the target model, the target training data indication information indicates an identifier of the target collaborative training task, an address of the training data, and an address of a target submodel corresponding to a training subtask executed by the model training entity #2. Then, the model training entity #2 may obtain the target submodel based on the address of the target submodel, and obtain the training data of the target length based on the address of the training data.

Optionally, if the model training management entity decomposes the model training task by splitting the training data, the target training data indication information indicates an identifier of the target collaborative training task, a target length, an address of the training data, and an address of the initial model. Then, the model training entity #2 may obtain the initial model based on the address of the initial model, and obtain the training data of the target length based on the address of the training data.

S809: The model training entity #2 obtains the target training data.

The model training entity #2 may obtain the training data of the target length based on the target training data indication information. For content of the target training data, refer to descriptions of step S708 in FIG. 7. Details are not described herein again.

S810: The model training entity #2 assists in executing the target model training task.

The model training entity #2 performs several rounds of training on the initial model by using the training data of the target length, to generate a submodel. Alternatively, the model training entity #2 performs several rounds of training on the target submodel by using the training data, to generate a trained target submodel.

S811: The model training entity #2 sends model transfer information to the model training entity #1.

The model transfer information indicates a trained submodel, that is, an initial model obtained by performing several rounds of training by using the training data of the target length, or a submodel obtained by performing several rounds of training on the target submodel.

Optionally, the model transfer information indicates a model gradient of the submodel or a model address of the submodel.

Optionally, if the model training management function decomposes the target model training task by splitting the target model, the model transfer information further indicates an identifier of the target submodel. The identifier of the target submodel may be determined based on splitting manner information of a model training management function during splitting, or may be agreed on by the model training function #1 or a model training function #2. This is not particularly limited in this application.

S812: The model training entity #1 performs model aggregation.

It may be understood that, for different decomposition manners of the model training task, the model training entity #1 may perform model aggregation in different manners. For example, when the model training management function decomposes the target model training task by splitting the target model, the model training entity #1 obtains the trained target submodel from the model training entity #2, and the model training entity may aggregate the target submodels. Alternatively, when the model training management function decomposes the model target model training task by splitting training data, the model training entity may obtain, based on the model transfer information, an initial model trained by using the model training function #2, and perform model aggregation with the initial model obtained by performing initial training, to obtain a trained inference model. For example, the model training entity may average gradients/weights of a plurality of submodels and the initial model to obtain a final aggregated model gradient/weight.

S813: The model training entity #1 sends training report information to the model inference entity #1.

The training report information may include the trained inference model. For content of the training report information, refer to descriptions of step S710 in FIG. 7. Details are not described herein again.

Based on this technical solution, the model training management entity may decompose the target model training task, and use the plurality of model training entities to collaboratively complete the training task, so that a training task burden of an original training body, namely, the model training entity #1, of the target model training task can be reduced, resources of the plurality of model training entities are fully utilized, and training waiting time of the model training entity #1 is shortened.

The foregoing separately describes manners of completing the target model training task by using the model training function #2. In a possible implementation, the model training function #2 may send, in a process of executing the target model training task, the assistance training feedback information and/or the network status change information described in S507 in FIG. 5 to the model training management entity, so that the model training management entity can learn of an execution status of the target model training task, and can perform adjustment in time, thereby improving model training reliability. This is described below with reference to FIG. 9.

FIG. 9 is a schematic flowchart of a method for performing feedback in a process of executing a target model training task according to an embodiment of this application.

It should be first noted that, for ease of understanding of this embodiment of this application, in an example shown in FIG. 9, an example in which a model training management entity manages three model training entities is used. The model training management entity may be any one of the model training management entities described in FIG. 1 to FIG. 3. A model training entity #1, a model training entity #2, and a model training entity #3 may be any one of the model training entities described in FIG. 1 to FIG. 3. This is not particularly limited in this application. In addition, the method in FIG. 9 may be combined with any one of the methods described in FIG. 5 to FIG. 8.

S901: The model training entity #2 sends assistance training feedback information and/or network status change information to the model training management entity.

The assistance training feedback information may indicate at least one of the following: precision achieved by the model training entity #2 by executing the target model training task, duration consumed by the model training entity #2 to execute the target model training task, an execution progress of executing the target model training task by the model training entity #2, and a quantity of resources occupied by the target model training entity to execute the target model training task.

The network change status information indicates that a change occurs in a network status of the model training entity #2 and consequently the model training entity #2 cannot continue to assist in executing the target model training task, or cannot complete the target model training task. For example, the network status change information indicates that an energy saving mode of the model training function #2 changes to entering an energy saving state, that is, the model training function #2 is to be turned off to implement energy saving. For another example, the network status change information indicates that a resource used by the model training function #2 for the model training is occupied, that is, a computing power resource used by the model training function #2 to assist in executing the target model training task is insufficient.

It may be understood that the model training entity #2 may send only the assistance training feedback information to the model training management entity, and the model training management entity may determine, based on content in the assistance training feedback information, whether to use another model training entity as a substitute to assist in executing the target model training task. Alternatively, the model training entity #2 may send only the network status change information to the model training management entity, so that the model training management entity may directly determine, based on the network status change information, to use another model training entity as a substitute to assist in executing the target model training task. Alternatively, the model training entity #2 may send the assistance training feedback information and the network status change information to the model training management entity. This is not particularly limited in this application.

S902: The model training management entity adjusts an allocation manner.

The adjusting the allocation manner may include: adjusting a manner in which a model training node assists in executing the target model training task (for example, changing a target length), and replacing a model training entity (for example, replacing the model training entity #2 with the model training entity #3). That is, the model training entity #3 is configured to assist in executing the target model training task. That is, the model training entity #3 may be an example of a second target model training entity of the model training management entity in a plurality of model training entities.

For example, if the assistance training feedback information indicates that a training process in which the model training entity #2 assists in executing the target model training task is abnormal, for example, consumed training time is greater than or equal to a specific threshold, model precision is less than or equal to a specific threshold, or a completion percentage indicated by the training progress is less than or equal to a specific threshold, the model training management entity may adjust the allocation manner.

For example, if the network status change information indicates that an energy saving mode of the model training entity #2 changes to entering an energy saving state, that is, the model training entity #2 is to be turned off to implement energy saving, the model training management entity may adjust an allocation manner of a target collaborative training task. If the network status change information indicates that a resource used by the model training entity #2 for model training is occupied, that is, an entity that is of the model training entity #2 and that is for the model training is turned off, the model training management entity may alternatively adjust an allocation manner.

S903: The model training management entity sends configuration change information #1 to the model training entity #1.

The configuration change information #1 indicates an adjusted allocation manner, for example, indicates a changed target length, and for another example, indicates that the model training entity #2 assisting in executing the target model training task is changed to the model training entity #3 assisting in executing the target model training task.

S904: The model training management entity sends configuration change information #2 to the model training entity #2.

The configuration change information #2 indicates the model training entity #2 to assist in executing the target model training task in an adjusted manner, or indicates the model training entity #2 to stop assisting in executing the target model training task.

Optionally, if the adjusted manner of the model training management entity is to replace the model training entity that assists in the training, for example, to replace the model training entity #2 with the model training entity #3, the method further includes step S905.

Optionally, S905: The model training management entity sends third training task configuration information to the model training entity #3.

The third training task configuration information indicates the model training entity #3 to assist the model training entity #1 in executing the target model training task. Content in the third training task configuration information is similar to descriptions of the first training task configuration information in step S504 in FIG. 5. Details are not described herein again.

It may be understood that the model training entity #3 may assist, based on the third training task configuration information, in executing the target model training task, that is, the model training entity #3 may perform content in steps S506 to S508, S707 to S710, or S809 to S813 in FIG. 5. Details are not described herein again.

Based on this technical solution, in a process of assisting in executing the model training task, the model training entity may feed back an execution status to the model training management entity, so that the model training management entity can learn of the execution status of the target model training task, and can perform adjustment in time, thereby improving model training reliability.

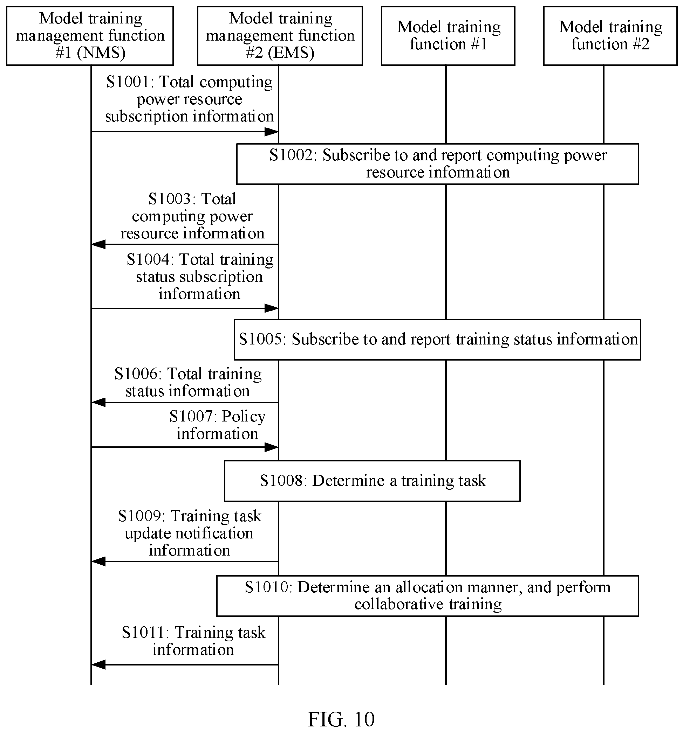

All the methods in FIG. 5 to FIG. 9 may be applied to the architectures in FIG. 1 to FIG. 3. It may be understood that, for ease of understanding of embodiments of this application, one model training management entity is used for description in the foregoing description processes. If there are a plurality of model training management entities in a system, for example, with reference to FIG. 3, there is one model training management entity in each of the EMS and the NMS, the model training management entity in FIG. 5 to FIG. 9 may be considered as a model training management entity in the EMS, and the model training management entity in the EMS may interact with a model training management entity in the NMS, so that the plurality of model training entities are jointly managed. For ease of understanding, the following describes this implementation with reference to FIG. 10.

FIG. 10 is a schematic flowchart of an implementation in which two model training management entities perform model training management according to an embodiment of this application.

It should be noted that, in FIG. 10, an example in which a model training management entity #1 is a model training management entity in an NMS, and a model training management entity #2 is a model training management entity in an EMS.

S1001: The model training management entity #1 sends total computing power resource subscription information to the model training management entity #2.

The total computing power resource subscription information indicates the model training management entity #2 to subscribe to computing power resource information of a plurality of model training management entities. The plurality of model training management entities are model training entities managed by the model training management entity #2. For content of the computing power resource information, refer to descriptions of step S502 in FIG. 5. Details are not described herein again.

S1002: Subscribe to and report the computing power resource information.

The model training management entity #2, the model training entity #1, and the model training entity #2 may perform content in steps S601 to S604 described in FIG. 6. Details are not described herein again.

S1003: The model training management entity #2 sends total computing power resource information to the model training management entity #1.

The model training management entity #2 may directly send, to the model training management entity #1, computing power resource information #1 and computing power resource information #2 that are received from the model training entity #1 and the model training entity #2; or the model training management entity #2 may process computing power resource information #1 and computing power resource information #2, and then send processed computing power resource information #1 and processed computing power resource information #2 to the model training management entity #1. This is not particularly limited in this application.

S1004: The model training management entity #2 sends total training status subscription information to the model training management entity #1.

The total training status subscription information indicates the model training management entity #2 to subscribe to training status information of the plurality of model training management entities. For content of the training status information, refer to descriptions of step S501 in FIG. 5. Details are not described herein again.

S1005: Subscribe to and report the training status information.

The model training management entity #2, the model training entity #1, and the model training entity #2 may perform content in steps S605 to S608 described in FIG. 6. Details are not described herein again.

S1006: The model training management entity #2 sends total training status information to the model training management entity #1.

The model training management entity #2 may directly send, to the model training management entity #1, training status information #1 and training status information #2 that are received from the model training entity #1 and the model training entity #2; or the model training management entity #2 may process training status information #1 and training status information #2, and then send processed training status information #1 and processed training status information #2 to the model training management entity #1. This is not particularly limited in this application.

S1007: The model training management entity #1 sends policy information to the model training management entity #2

The policy information indicates a manner of determining, in a plurality of model training entities based on a plurality of pieces of computing power resource information, a target model training entity (namely, the model training entity #2 in this embodiment of this application) configured to assist in executing a target model training task, and/or a manner of determining, based on a total length of training data used to complete the target model training task, a target length of training data used for the target model training task.

Optionally, if the model training management entity determines whether collaborative training is needed, the policy information further indicates a manner of determining whether the collaborative training is needed.

For example, the manner of determining whether the collaborative training is needed includes at least one of the following:
a priority-based allocation manner: Whether the collaborative training is needed is determined based on a priority of the training task, where when the priority of the training task is greater than or equal to a priority threshold, it is determined that the collaborative training is needed; or when the priority of the training task is less than a priority threshold, it is determined that the collaborative training is not needed;
a computing power resource utilization-based allocation manner: Whether collaborative training is needed is determined based on computing power resource utilization, where when the computing power resource utilization of the model training entity is greater than or equal to a utilization threshold, it is determined that the model training entity needs the collaborative training; or when the computing power resource utilization of the model training entity is less than a utilization threshold, it is determined that the model training entity does not need the collaborative training; and
a training data volume-based allocation manner: Whether collaborative training is needed is determined based on a training data volume needed by the training task, where when the training data volume of the training task is greater than a data volume threshold, it is determined that the collaborative training is needed; or when the training data volume of the training task is less than or equal to a data volume threshold, it is determined that the collaborative training is not needed.

For example, a manner of determining the target model training entity includes at least one of the following:
a computing power resource-based manner: The target model training entity is determined based on an idle computing resource, where for example, a model training entity with a largest quantity of idle computing power resources is selected as the target model training entity; and
a node location-based manner: The target model training entity is determined based on the model training entity and a primary model training entity (for example, the model training entity #1 in embodiments of this application), where for example, a model training entity closest to the primary model training entity is selected as the target model training entity.

For example, the manner of determining the target length of the training data includes at least one of the following:
a computing power resource-based manner: The target length is determined based on an idle computing resource, where for example, the target length is determined as a target length that can be processed by using the idle computing power resource of the model training entity; and
a quantity of model training entities-based manner: The target length is determined based on a quantity of model training entities that have idle computing power resources, where for example, if the model training management entity selects three model training entities to assist in executing the target model training task, the training data of the target model training task may be decomposed into three pieces of training data of a target length.

It may be understood that the policy information may include a specific manner, may include an index of the manner, for example, a name or an identifier of the manner, or may further include a parameter of the manner, for example, a priority threshold or a data volume threshold. This is not particularly limited in this application.

S 1008: Determine the training task.

The model training entity #1 and the model training management entity #2 may perform content in step S503 in FIG. 5, steps S701 to S703 in FIG. 7, or steps S801 to S803 in FIG. 8. Details are not described herein again.

S1009: The model training management entity #2 sends training task notification update information to the model training management entity #1.

The training task notification update information may be training task update notification information obtained by the model training management entity #1 from the model training entity #1, and indicates a newly added model training task on the model training entity #1. For related content, refer to descriptions of step S703 in FIG. 7 or step S803 in FIG. 8. Details are not described herein again.

It may be understood that the model training management entity #2 may directly send, to the model training management entity #1, the training task update notification information obtained from the model training entity #1; or may process the training task update notification information, and then send processed training task update notification information to the model training management entity #1. This is not particularly limited in this application.

S1010: Determine an allocation manner, and perform collaborative training.

The model training management entity #2, the model training entity #1, and the model training entity #2 may perform content in steps S504 to S508 in FIG. 5, steps S704 to S710 in FIG. 7, or steps S804 to S813 in FIG. 8, and optionally may further perform all content in FIG. 9. Details are not described herein again.

It may be understood that the model training management entity #2 may determine the allocation manner based on the policy information obtained from the model training management entity #1.

S1011: The model training management entity #2 sends training task information to the model training management entity #1.

The training task information may be training task information sent by the model training management entity #2 to a model training function #1. For related content, refer to descriptions of step S505 in FIG. 5. Details are not described herein again.

It may be understood that the model training management entity #2 may directly send, to the model training management entity #1, the training task information sent to the model training entity #1; or may process the training task information and send processed training task information to the model training management entity #1. This is not particularly limited in this application.

Based on this technical solution, the model training management function in the NMS may send the policy information to the model training management function in the EMS, to improve model training efficiency.

It should be understood that in a description process of the foregoing embodiments, one piece of information may be carried in one or more messages or one or more information elements in a same message, for example, two messages or two information elements in a same message. This is not particularly limited in this application.

The foregoing describes the method embodiments in embodiments of this application, and the following describes corresponding apparatus embodiments. It should be understood that descriptions of the apparatus embodiments correspond to the descriptions of the method embodiments. Therefore, for a part that is not described in detail, refer to the foregoing method embodiments.

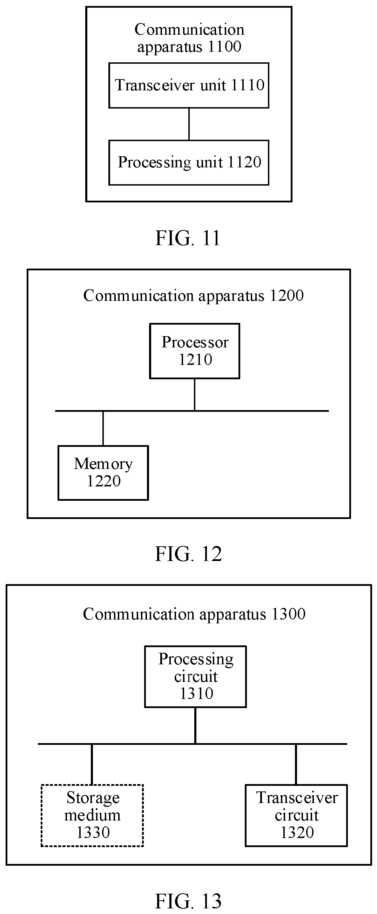

FIG. 11 is a diagram of a communication apparatus according to an embodiment of this application. As shown in FIG. 11, the apparatus 1100 may include a transceiver module 1110 and a processing module 1120. The transceiver module 1110 may communicate with an outside of the apparatus, and the processing module 1120 is configured to perform data processing. The transceiver module 1110 may also be referred to as a communication interface or a transceiver module.

In a possible design, the apparatus 1100 may implement a procedure performed by the model training management function in the method embodiments shown in FIG. 5 to FIG. 10. The processing module 1120 is configured to perform a processing-related operation of the model training management function in the method embodiments shown in FIG. 5 to FIG. 10. The transceiver module 1110 is configured to perform a sending/receiving-related operation of the model training management function in the method embodiments shown in FIG. 5 to FIG. 10.

For example, the transceiver module 1110 is configured to receive training status information from a first model training entity, where the training status information indicates at least one model training task of the first model training entity. The transceiver module 1110 is further configured to obtain a plurality of pieces of computing power resource information, where the plurality of pieces of computing power resource information respectively indicate idle computing power resources that are of a plurality of model training entities and that are used for model training. The processing module 1120 is configured to determine a first target model training entity from the plurality of model training entities based on the plurality of pieces of computing power resource information. The transceiver module 1110 is further configured to send first training task configuration information to the first target model training entity, where the first training task configuration information indicates to assist the first model training entity in executing a target model training task in the at least one model training task.

Based on this technical solution, the model training management entity may manage and orchestrate the computing power resources of the plurality of model training entities, and allocate the training task of the first model training entity to another model training entity with sufficient computing power resources to assist in completing the training, thereby shortening training waiting time of the training task of the first model training entity, and improving model training efficiency.

In another possible design, the apparatus 1100 may implement a procedure performed by a first model management function (namely, the model management function #1) in the method embodiments shown in FIG. 5 to FIG. 10. The transceiver module 1110 is configured to perform a sending/receiving-related operation of the model management function #1 in the method embodiments shown in FIG. 5 to FIG. 10, and the processing module 1120 is configured to perform a processing-related operation of the model management function #1 in the method embodiments shown in FIG. 5 to FIG. 10.

Based on this technical solution, the model training entity may report the computing power resource information and the training status information to the model training management entity, so that the model training management entity may manage and orchestrate the computing power resources of the plurality of model training entities, and allocate the training task of the model training entity to another model training entity with sufficient computing power resources to assist in completing the training, thereby shortening training waiting time of the training task of the model training entity, and improving model training efficiency.

For example, the processing module 1120 is configured to generate training status information. The transceiver module 1110 is configured to send the training status information to a model training management entity, where the training status information indicates at least one model training task of a model training entity. The transceiver module is further configured to send computing power resource information to the model training management entity, where the computing power resource information indicates an idle computing power resource that is of the model training entity and that is used for model training. The transceiver module 1110 is further configured to receive training task information from the model training management entity, where the training task information indicates a first target model training entity that assists in executing a target model training task in the at least one model training task.

In still another possible design, the apparatus 1100 may implement a procedure performed by a first target model management function (namely, the model management function #2) in the method embodiments shown in FIG. 5 to FIG. 10. The transceiver module 1110 is configured to perform a sending/receiving-related operation of the model management function #2 in the method embodiments shown in FIG. 5 to FIG. 10, and the processing module 1120 is configured to perform a processing-related operation of the model management function #2 in the method embodiments shown in FIG. 5 to FIG. 10.

For example, the transceiver module 1110 is configured to send computing power resource information to a model training management entity, where the computing power resource information indicates an idle computing power resource that is of a model training entity and that is used for model training. The transceiver module 1110 is further configured to receive first training task configuration information from the model training management entity, where the first training task configuration information indicates to assist a first model training entity in executing a target model training task. The processing module 1120 is configured to assist the first model training entity in executing the target model training task.

Based on this technical solution, the model training entity may report the computing power resource information and training status information to the model training management entity, so that the model training management entity may manage and orchestrate computing power resources of a plurality of model training entities, and allocate a training task of the model training entity to another model training entity with sufficient computing power resources to assist in completing training, thereby shortening training waiting time of the training task of the model training entity, and improving model training efficiency.

It should be understood that, the apparatus 1100 herein is presented in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the model training management function in the foregoing embodiments or a chip used in the model training management function, and may be configured to perform a procedure corresponding to the model training management function in the foregoing method embodiments; or the apparatus 1100 may be specifically the model training function or a chip used in the model training function in the foregoing embodiments, and may be configured to perform a procedure corresponding to the model training function in the foregoing method embodiments. To avoid repetition, details are not described herein again.

The apparatus 1100 has a function of implementing a corresponding step performed by the model training management function in the foregoing methods, or the apparatus 1100 has a function of implementing a corresponding step performed by the model training function in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform a transceiver operation and a processing-related operation in the method embodiments.

In addition, the transceiver module may alternatively be a transceiver circuit (for example, may include a receiver circuit and a transmitter circuit), and the processing module may be a processing circuit. In this embodiment of this application, the apparatus in FIG. 11 may be the model training management function or the model training function in the foregoing embodiments, or may be a chip or a chip system, for example, a system on chip (system on chip, SoC). The transceiver module may be an input/output circuit or a communication interface. The processing module is a processor, a microprocessor, or an integrated circuit integrated on the chip. This is not limited herein.

FIG. 12 shows a communication apparatus 1200 according to an embodiment of this application. The apparatus 1200 includes a processor 1210 and a memory 1220. The memory 1220 is configured to store instructions. The processor 1210 may invoke the instructions stored in the memory 1220, to perform a procedure corresponding to the model training management function or the model training function in the foregoing method embodiments.

Specifically, in a possible implementation, the memory 1220 is configured to store the instructions. The processor 1210 may invoke the instructions stored in the memory 1220, to perform the procedure corresponding to the model training management function in the foregoing method embodiments.

Specifically, in another possible implementation, the memory 1220 is configured to store the instructions. The processor 1210 may invoke the instructions stored in the memory 1220, to perform the procedure corresponding to the model training function in the foregoing method embodiments.

It should be understood that the apparatus 1200 may be specifically the model training management function or the model training function in the foregoing embodiments, or may be a chip or a chip system used in the model training management function or the model training function. Specifically, the apparatus 1200 may be configured to perform the procedure corresponding to the model training management function or the model training function in the foregoing method embodiments.

Optionally, the memory 1220 may include a read-only memory and a random access memory, and provide instructions and data for the processor. A part of the memory may further include a nonvolatile random access memory. For example, the memory may further store information about a device type. The processor 1210 may be configured to execute the instruction stored in the memory, and when the processor 1210 executes the instructions stored in the memory, the processor 1210 is configured to perform the procedure corresponding to the model training management function or the model training function in the method embodiments.

During implementation, the steps in the foregoing methods may be completed by using a hardware integrated logical circuit in the processor or instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

It should be noted that, the processor in embodiments of this application may be an integrated circuit chip, and has a signal processing capability. During implementation, the steps in the foregoing method embodiments may be completed by using a hardware integrated logical circuit in the processor or instructions in a form of the software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

FIG. 13 shows a communication apparatus 1300 according to an embodiment of this application. The apparatus 1300 includes a processing circuit 1310 and a transceiver circuit 1320. The processing circuit 1310 and the transceiver circuit 1320 communicate with each other through an internal connection path. The processing circuit 1310 is configured to execute instructions, to control the transceiver circuit 1320 to send a signal and/or receive a signal.

Optionally, the apparatus 1300 may further include a storage medium 1330. The storage medium 1330 communicates with the processing circuit 1310 and the transceiver circuit 1320 through an internal connection path. The storage medium 1330 is configured to store instructions, and the processing circuit 1310 may execute the instructions stored in the storage medium 1330.

In a possible implementation, the apparatus 1300 is configured to implement a procedure corresponding to the model training management entity in the foregoing method embodiments.

When the communication apparatus 1300 is configured to implement the methods shown in FIG. 5 to FIG. 10, the processing circuit 1310 is configured to implement functions of the processing module 1120, and the transceiver circuit 1320 is configured to implement functions of the transceiver module 1110 or functions of the transceiver module 1110 and the processing module 1120.

In another possible implementation, the apparatus 1300 is configured to implement a procedure corresponding to the model training entity in the foregoing method embodiments.

When the communication apparatus 1300 is configured to implement the methods shown in FIG. 5 to FIG. 10, the processing circuit 1310 is configured to implement functions of the processing module 1120, and the transceiver circuit 1320 is configured to implement functions of the transceiver module 1110 or functions of the transceiver module 1110 and the processing module 1120.

According to the methods provided in embodiments of this application, this application further provides a computer program product. The computer program product includes computer program code. When the computer program code is run on a computer, the computer is enabled to perform the methods in the embodiments shown in FIG. 5 to FIG. 10.

According to the methods provided in embodiments of this application, this application further provides a computer-readable storage medium. The computer-readable storage medium stores program code. When the program code is run on a computer, the computer is enabled to perform the methods in the embodiments shown in FIG. 5 to FIG. 10.

According to the methods provided in embodiments of this application, this application further provides a system. The system includes the foregoing model training management function or a plurality of model training functions.

The term "at least one of..." in this specification represents all or any combination of listed items. For example, "at least one of A, B, and C" may represent the following six cases: Only A exists, Only B exists, Only C exists, both A and B exist, both B and C exist, and all A, B, and C exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A, and B may alternatively be determined based on A and/or other information. The terms "include", "have", and their variants all mean "include but are not limited to", unless otherwise specifically emphasized in another manner.

It should be further understood that, in various embodiments of this application, first, second, and various numbers are merely for differentiation for ease of description, and are not for limiting the scope of embodiments of this application. For example, different information is differentiated.

It should be further understood that, in various embodiments of this application, an "indication" may include a direct indication and an indirect indication, or may include an explicit indication and an implicit indication. Information indicated by specific information (for example, the foregoing first information) is referred to as to-be-indicated information. During specific implementation, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

It should be further understood that in various embodiments of this application, "preconfiguration" may be implemented by pre-storing corresponding code or a corresponding table in a device (for example, a first terminal device), or in another manner that may indicate related information. A specific implementation of the "preconfiguration" is not limited in this application.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**In** the several embodiments provided in this application, it should be understood that the disclosed system, apparatus, and method may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. **In** addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

**In** addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model training management method, wherein the method comprises:
receiving, by a model training management entity, training status information of a first model training entity, wherein the training status information indicates at least one model training task of the first model training entity;
obtaining, by the model training management entity, a plurality of pieces of computing power resource information, wherein the plurality of pieces of computing power resource information respectively indicate idle computing power resources that are of a plurality of model training entities and that are used for model training;
determining, by the model training management entity, a first target model training entity from the plurality of model training entities based on the plurality of pieces of computing power resource information; and
sending, by the model training management entity, first training task configuration information to the first target model training entity, wherein the first training task configuration information indicates to assist the first model training entity in executing a target model training task in the at least one model training task.

2. The method according to claim 1, wherein the obtaining, by the model training management entity, a plurality of pieces of computing power resource information comprises:
periodically receiving, by the model training management entity, the plurality of pieces of computing power resource information from the plurality of model training entities respectively.

3. The method according to claim 1, wherein the obtaining, by the model training management entity, a plurality of pieces of computing power resource information comprises:
sending, by the model training management entity, a plurality of pieces of computing power resource query information to the plurality of model training entities respectively; and
receiving, by the model training management entity, the plurality of pieces of computing power resource information from the plurality of model training entities respectively.

4. The method according to any one of claims 1 to 3, wherein the receiving, by a model training management entity, training status information of a first model training entity comprises:
periodically receiving, by the model training management entity, the training status information from the first model training entity.

5. The method according to any one of claims 1 to 4, wherein the method further comprises:
sending, by the model training management entity, training task configuration notification information to the first model training entity, wherein the training task configuration notification information indicates that the first target model training entity assists in executing the target model training task.

6. The method according to any one of claims 1 to 4, wherein the method further comprises:
determining, by the model training management entity, a target length of training data used by the first target model training entity to assist in executing the target model training task; and
sending, by the model training management entity, second training task configuration information to the first model training entity, wherein the second training task configuration information indicates the first target model training entity to assist, by using the training data of the target length, in executing the target model training task.

7. The method according to claim 6, wherein the training status information further indicates a total length of training data used to complete the target model training task, and the determining, by the model training management entity, a target length comprises:
determining, by the model training management entity, the target length based on the total length and computing power resource information of the first target model training entity.

8. The method according to any one of claims 1 to 7, wherein the method further comprises:
receiving, by the model training management entity, assistance training feedback information from the first target model training entity, wherein the assistance training feedback information indicates at least one of the following:
precision achieved by the first target model training entity executing the target model training task,
duration consumed by the first target model training entity to execute the target model training task,
an execution progress of executing the target model training task by the first target model training entity, and
a quantity of resources occupied by the first target model training entity to execute the target model training task.

9. The method according to any one of claims 1 to 8, wherein the method further comprises:
receiving, by the model training management entity, network status change information from the first target model training entity;
determining, by the model training management entity based on the network status change information and the plurality of pieces of computing power resource information, to replace the first target model training entity with a second target model training entity in the plurality of model training entities; and
sending, by the model training management entity, third training task configuration information to the second target model training entity, wherein the third training task configuration information indicates to assist the first model training entity in executing the target model training task.

10. The method according to any one of claims 1 to 9, wherein the method further comprises:
obtaining, by the model training management entity, policy information, wherein the policy information indicates a manner of determining the first target model training entity in the plurality of model training entities based on the plurality of pieces of computing power resource information, and/or indicates a manner of determining, based on the total length of the training data used to complete the target model training task, the target length of the training data used by the first target model training entity to assist in executing the target model training task.

11. A model training management method, wherein the method comprises:
sending, by a model training entity, training status information to a model training management entity, wherein the training status information indicates at least one model training task of the model training entity;
sending, by the model training entity, computing power resource information to the model training management entity, wherein the computing power resource information indicates an idle computing power resource that is of the model training entity and that is used for model training; and
receiving, by the model training entity, training task information from the model training management entity, wherein the training task information indicates a first target model training entity that assists in executing a target model training task in the at least one model training task

12. The method according to claim 11, wherein the sending, by the model training entity, computing power resource information to the model training management entity comprises:
periodically sending, by the model training entity, the computing power resource information to the model training management entity; or
receiving, by the model training entity, computing power resource query information from the model training management entity; and sending, by the model training entity, the computing power resource information to the model training management entity.

13. The method according to claim 11 or 12, wherein the sending, by a model training entity, training status information to a model training management entity comprises:
periodically sending, by the model training entity, the training status information to the model training management entity; or
sending, by the model training entity, the training status information to the model training management entity based on a trigger event.

14. The method according to any one of claims 11 to 13, wherein the training task information further indicates the first target model training entity to assist, by using training data of a target length, in executing the target model training task.

15. The method according to any one of claims 11 to 14, wherein the method further comprises:
receiving, by the model training entity, model training report information from the first target model training entity, wherein the model training report information indicates a submodel obtained by completing the target model training task; and
performing, by the model training entity, model aggregation based on the submodel.

16. A model training management method, wherein the method comprises:
sending, by a model training entity, computing power resource information to a model training management entity, wherein the computing power resource information indicates an idle computing power resource that is of the model training entity and that is used for model training;
receiving, by the model training entity, first training task configuration information from the model training management entity, wherein the first training task configuration information indicates to assist a first model training entity in executing a target model training task; and
assisting, by the model training entity, the first model training entity in executing the target model training task.

17. The method according to claim 16, wherein the sending, by a model training entity, computing power resource information to a model training management entity comprises:
periodically sending, by the model training entity, the computing power resource information to the model training management entity; or
receiving, by the model training entity, computing power resource query information from the model training management entity; and sending, by the model training entity, the computing power resource information to the model training management entity.

18. The method according to claim 16 or 17, wherein the assisting, by the model training management entity, the first model training entity in executing the target model training task comprises:
obtaining, by the model training entity, target training data; and
assisting, by the model training entity by using the target training data, the first model training entity in executing the target model training task.

19. The method according to any one of claims 16 to 18, wherein the method further comprises:
sending, by the model training entity, model training report information to the first model training entity, wherein the model training report information indicates a submodel obtained by completing the target model training task.

20. The method according to any one of claims 16 to 19, wherein the method further comprises:
sending, by the model training entity, assistance training feedback information to the model training management entity, wherein the assistance training feedback information indicates at least one of the following:
precision achieved by the model training entity by executing the target model training task,
duration consumed by the model training entity to execute the target model training task,
an execution progress of executing the target model training task by the model training entity, and
a quantity of resources occupied by the model training entity to execute the target model training task.

21. The method according to any one of claims 16 to 20, wherein the method further comprises:
sending, by the model training entity, network status change information to the model training management entity, wherein the network status change information indicates that the model training entity cannot complete the target model training task.

22. A model training management method, wherein the method comprises:
sending, by a first model training entity, training status information to a model training management entity, wherein the training status information indicates at least one model training task of the first model training entity;
receiving, by the model training management entity, the training status information from the first model training entity;
obtaining, by the model training management entity, a plurality of pieces of computing power resource information, wherein the plurality of pieces of computing power resource information respectively indicate idle computing power resources that are of a plurality of model training entities and that are used for model training;
determining, by the model training management entity, a first target model training entity from the plurality of model training entities based on the plurality of pieces of computing power resource information;
sending, by the model training management entity, first training task configuration information to the first target model training entity, wherein the first training task configuration information indicates to assist the first model training entity in executing a target model training task;
receiving, by the first target model training entity, the first training task configuration information from the model training management entity; and
assisting, by the first target model training entity, the first model training entity in executing the target model training task.

23. The method according to claim 22, wherein the obtaining, by the model training management entity, a plurality of pieces of computing power resource information comprises:
periodically receiving, by the model training management entity, the plurality of pieces of computing power resource information from the plurality of model training entities respectively; and
periodically sending, by the plurality of model training entities, the computing power resource information to the model training management entity.

24. The method according to claim 22, wherein the obtaining, by the model training management entity, a plurality of pieces of computing power resource information comprises:
sending, by the model training management entity, a plurality of pieces of computing power resource query information to the plurality of model training entities respectively;
receiving, by the plurality of model training entities, the plurality of pieces of computing power resource query information from the model training management entity respectively;
receiving, by the model training management entity, the plurality of pieces of computing power resource information from the plurality of model training entities respectively; and
sending, by the plurality of model training entities, the plurality of pieces of computing power resource information to the model training management entity respectively.

25. The method according to any one of claims 22 to 24, wherein the sending, by the first model training entity, the training status information of the first model training entity to the model training management entity, and receiving, by the model training management entity, the training status information from the first model training entity comprises:
periodically receiving, by the model training management entity, the training status information from the first model training entity; and periodically sending, by the first model training entity, the training status information of the first model training entity to the model training management entity; or
sending, by the first model training entity, the training status information to the model training management entity based on a trigger event; and receiving, by the model training management entity, the training status information from the first model training entity.

26. The method according to any one of claims 22 to 25, wherein the method further comprises:
sending, by the model training management entity, training task configuration notification information to the first model training entity, wherein the training task configuration notification information indicates that the first target model training entity assists in executing the target model training task; and
receiving, by the first model training entity, the training task configuration notification information from the model training management entity.

27. The method according to any one of claims 22 to 25, wherein the method further comprises:
determining, by the model training management entity, a target length of training data used by the first target model training entity to assist in executing the target model training task;
sending, by the model training management entity, second training task configuration information to the first model training entity, wherein the second training task configuration information indicates the first target model training entity to assist, by using the training data of the target length, in executing the target model training task; and
receiving, by the first model training entity, the second training task configuration information from the model training management entity.

28. The method according to claim 27, wherein the determining, by the model training management entity, a target length comprises:
determining, by the model training management entity, the target length based on a total length and computing power resource information of the first target model training entity, wherein the training status information further indicates the total length of training data used to complete the target model training task.

29. The method according to any one of claims 22 to 28, wherein the method further comprises:
receiving, by the model training management entity, assistance training feedback information from the first target model training entity, wherein the assistance training feedback information indicates at least one of the following:
precision achieved by the first target model training entity executing the target model training task,
duration consumed by the first target model training entity to execute the target model training task,
an execution progress of executing the target model training task by the first target model training entity, and
a quantity of resources occupied by the first target model training entity to execute the target model training task; and
sending, by the first target model training entity, the assistance training feedback information to the model training management entity.

30. The method according to any one of claims 22 to 29, wherein the method further comprises:
receiving, by the model training management entity, network status change information from the first target model training entity;
sending, by the first target model training entity, the network status change information to the model training management entity;
determining, by the model training management entity based on the network status change information and the plurality of pieces of computing power resource information, to replace the first target model training entity with a second target model training entity in the plurality of model training entities;
sending, by the model training management entity, third training task configuration information to the second target model training entity, wherein the third training task configuration information indicates to assist the first model training entity in executing the target model training task; and
receiving, by the second target model training entity, the third training task configuration information from the model training management entity.

31. The method according to any one of claims 22 to 30, wherein the method further comprises:
obtaining, by the model training management entity, policy information, wherein the policy information indicates a manner of determining the first target model training entity in the plurality of model training entities based on the plurality of pieces of computing power resource information, and/or indicates a manner of determining, based on the total length of the training data used to complete the target model training task, the target length of the training data used by the first target model training entity to assist in executing the target model training task.

32. The method according to any one of claims 22 to 31, wherein the method further comprises:
sending, by the first target model training entity, model training report information to the model training entity, wherein the model training report information indicates a submodel obtained by completing the target model training task;
receiving, by the model training entity, the model training report information from the first target model training entity; and
performing, by the model training entity, model aggregation based on the submodel.

33. The method according to claim 22 or 32, wherein the assisting, by the model training management entity, the first model training entity in executing the target model training task comprises:
obtaining, by the model training entity, target training data; and
assisting, by the model training entity by using the target training data, the first model training entity in executing the target model training task.

34. A communication apparatus, comprising a module configured to perform the method according to any one of claims 1 to 10, a module configured to perform the method according to any one of claims 11 to 15, a module configured to perform the method according to any one of claims 16 to 21, or a module configured to perform the method according to any one of claims 22 to 33.

35. A communication apparatus, comprising at least one processor, wherein the at least one processor is configured to execute a computer program stored in a memory, to enable the apparatus to implement the method according to any one of claims 1 to 10, the method according to any one of claims 11 to 15, the method according to any one of claims 16 to 21, or the method according to any one of claims 22 to 33.

36. A communication apparatus, comprising at least one processor, wherein the at least one processor is coupled to at least one memory, and the at least one processor is configured to execute a computer program or instructions stored in the at least one memory, to enable the method according to any one of claims 1 to 10 to be performed, the method according to any one of claims 11 to 15 to be performed, the method according to any one of claims 16 to 21 to be performed, or the method according to any one of claims 22 to 33 to be performed.

37. A computer-readable storage medium, comprising a computer program, wherein when the computer program is run on a computer, the computer is enabled to perform the method according to any one of claims 1 to 10, the method according to any one of claims 11 to 15, the method according to any one of claims 16 to 21, or the method according to any one of claims 22 to 33.

38. A communication system, comprising an apparatus configured to perform the method according to any one of claims 1 to 10, an apparatus configured to perform the method according to any one of claims 11 to 15, and an apparatus configured to perform the method according to any one of claims 16 to 21.

39. A computer program product, comprising computer program code, wherein when the computer program code is run on a computer, the computer is enabled to implement the method according to any one of claims 1 to 10, the computer is enabled to implement the method according to any one of claims 11 to 15, the computer is enabled to implement the method according to any one of claims 16 to 21, or the computer is enabled to implement the method according to any one of claims 22 to 33.

40. A communication apparatus, comprising: a processor, configured to execute a computer program stored in a memory, to enable the apparatus to perform the method according to any one of claims 1 to 10, to enable the apparatus to perform the method according to any one of claims 11 to 15, to enable the apparatus to perform the method according to any one of claims 16 to 21, or to enable the apparatus to perform the method according to any one of claims 22 to 33.

41. The apparatus according to claim 40, wherein the apparatus further comprises the memory.
